(19) Europäisches Patentamt
European Patent Office
Office européen des brevets

(11) **EP 4 707 908 A1**

(12) **DEMANDE DE BREVET EUROPEEN**

(43) Date de publication:
**11.03.2026 Bulletin 2026/11**

(21) Numéro de dépôt: **25201218.2**

(22) Date de dépôt: **09.09.2025**

(51) Classification Internationale des Brevets (IPC):
**G02F 1/13** (2006.01)    **G02B 6/00** (2006.01)
**G02B 27/01** (2006.01)    **G02F 1/13357** (2006.01)

(52) Classification Coopérative des Brevets (CPC):
**G02F 1/1326; G02B 6/00; G02B 27/0172;**
G02B 5/045; G02B 2027/0174; G02F 1/133615

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **10.09.2024 FR 2409629**

(71) Demandeur: **Commissariat à l'Energie Atomique et aux Energies Alternatives**
**75015 Paris (FR)**

(72) Inventeurs:
• **MARTINEZ, Christophe**
**38054 Grenoble Cedex 09 (FR)**
• **LEE, Yann**
**38054 Grenoble Cedex 09 (FR)**
• **TOUBI, Salaheddine**
**38054 Grenoble Cedex 09 (FR)**

(74) Mandataire: **Santarelli**
**Tour Trinity**
**1 bis Place de la Défense**
**92400 Courbevoie (FR)**

(54) **DISPOSITIF D'AFFICHAGE D'UNE IMAGE**

(57) L'invention porte sur dispositif d'affichage d'une image comprenant une matrice de structures d'extraction et des ensembles de guides d'onde et d'électrodes d'adressage s'étendant respectivement selon des axes xi et ya, ya faisant un angle $\beta$ avec un axe yi orthogonal à xi. Chaque structure d'extraction comporte un guide d'onde intermédiaire en cristal liquide agencé entre une électrode d'adressage et une électrode commune de façon à faire basculer son indice d'un premier niveau vers un deuxième niveau. Une face d'entrée du guide d'onde intermédiaire fait un angle $\gamma$ supérieur à 30 degrés avec le substrat et un angle égal à $\beta$ avec l'axe yi. En fonctionnement, un mode du guide d'onde d'adressage est couplé au guide d'onde intermédiaire uniquement lorsque l'indice du cristal liquide est égal au deuxième niveau pour extraire un faisceau correspondant à l'affichage d'un pixel, après réflexion totale sur la face d'entrée de la structure d'extraction adjacente.

Fig. 1B

EP 4 707 908 A1

## Description

### DOMAINE TECHNIQUE

Le domaine de l'invention est celui des dispositifs d'affichage d'une image, tels que des micro-écrans pouvant par exemple être utilisés pour des applications de réalité étendue (réalité augmentée, réalité virtuelle ou réalité mixte).

### ÉTAT DE LA TECHNIQUE ANTÉRIEURE

Les dispositifs d'affichage comme les micro-écrans sont utilisés pour de nombreuses applications. Ils sont par exemple utilisés dans des vidéoprojecteurs, des lunettes de réalité étendue, des casques de réalité virtuelle, ou encore pour afficher des informations dans des oculaires pour appareils photographiques, jumelles ou caméras. Parmi les nombreux paramètres caractérisant le niveau de performance d'un micro-écran, la consommation d'énergie, la résolution et la compacité sont particulièrement importants. On s'intéresse généralement à la compacité globale des systèmes qui les intègrent.

Le document C. Martinez et al. « See-through holographic retinal projection display concept », Optica, vol. 5, n° 10, p. 1200, oct. 2018, doi: 10.1364/OPTICA.5.001200 décrit un système de réalité augmentée particulièrement compact intégrant un micro-écran exploitant un effet d'auto-focalisation. Ce type de micro-écran permet de se passer d'un système optique pour projeter une image dans l'oeil d'un utilisateur, et peut par conséquent être intégré dans des systèmes de réalité augmentée moins complexes, moins encombrants et moins lourds.

Dans les grandes lignes, un pixel d'un tel écran résulte de la combinaison de plusieurs ondes lumineuses cohérentes entre-elles, issues d'une distribution de points d'émission. La lumière est amenée au regard des points d'émission par un réseau de guides d'ondes intégrés, connectés optiquement à une source lumineuse. Chaque point d'émission comporte une structure d'extraction active permettant d'extraire sur commande de la lumière depuis un guide d'onde correspondant. Un film holographique disposé sur les structures d'extraction actives permet d'ajuster la phase et la direction de la lumière extraite par les structures d'extraction actives. Les points d'émissions peuvent par exemple émettre des ondes lumineuses ayant la même phase modulo $2\pi$ et se propageant autour d'axes principaux parallèles. Dans ce cas, l'œil de l'observateur voit un point net correspondant à un pixel virtuel situé à l'infini. Un circuit de commande connecté à la source lumineuse et à un réseau d'électrodes permet d'activer en même temps la source lumineuse et les structures d'extraction correspondant au pixel.

A l'instar de ce micro-écran dont le fonctionnement vient d'être décrit succinctement, il existe d'autres micro-écrans à distribution de lumière guidée, comportant des points d'émission couplés optiquement à une ou plusieurs sources lumineuses par un réseau de guides d'ondes intégrés. Ils sont en général avantageux pour leur compacité, notamment pour être utilisés dans des systèmes optiques dits « proche de l'oeil », comme par exemple des lunettes de réalité augmentée. Il est toutefois nécessaire de baisser leurs consommations d'énergie. Pour cela, il est par exemple souhaitable d'augmenter la directivité de la lumière extraite au niveau de chaque point d'émission, de façon à ne pas perdre de flux lumineux entre le micro-écran et l'oeil d'un utilisateur.

Les micro-écrans à distribution de lumière guidée intègrent fréquemment des réseaux de diffraction pour extraire la lumière au niveau des points d'émission. Cependant, ces réseaux diffractent généralement la lumière dans un ou plusieurs ordres de diffraction superflus, engendrant des pertes optiques et éventuellement une ou plusieurs images parasites. En outre, la lumière ne peut être extraite efficacement, sans perte d'énergie, que pour une grande longueur du réseau de diffraction, ce qui nuit à la compacité ou à la définition du micro-écran.

### EXPOSÉ DE L'INVENTION

L'invention a pour objectif de remédier au moins en partie aux inconvénients de l'art antérieur, et plus particulièrement de proposer un dispositif d'affichage d'une image compact, consommant moins d'énergie électrique que les dispositifs d'affichage de l'état de la technique.

Pour cela, l'objet de l'invention est un dispositif d'affichage d'une image constituée d'un ensemble de pixels, comportant un substrat muni d'un repère orthogonal et comprenant une face supérieure ; un module d'éclairage ; une électrode commune ; un ensemble de guides d'onde d'adressage couplés optiquement au module d'éclairage, s'étendant parallèlement à un axe orienté xa, parallèle à xi ; un ensemble d'électrodes d'adressage s'étendant parallèlement à un axe orienté ya, faisant un angle $\beta$ avec l'axe yi ; une matrice de structures d'extraction de lumière. Le dispositif d'affichage est tel que l'électrode commune, la matrice de structures d'extraction, l'ensemble de guides d'onde d'adressage et l'ensemble d'électrodes d'adressage s'étendent successivement depuis la face supérieure, dans des plans distincts parallèles à la face supérieure.

Chaque structure d'extraction de la matrice est agencée à une intersection d'un guide d'onde d'adressage et d'une électrode d'adressage, et comporte un guide d'onde intermédiaire en un cristal liquide s'étendant parallèlement à la face supérieure depuis une face d'entrée du guide d'onde intermédiaire jusqu'à une face de sortie du guide d'onde intermédiaire, le guide d'onde intermédiaire étant agencé entre l'électrode d'adressage et l'électrode commune de façon à faire basculer un indice de réfraction du cristal liquide selon une direction de polarisation, d'un premier niveau vers un deuxième niveau strictement supérieur au premier niveau, lorsqu'une variation d'une différence de potentiel électrique est appliquée entre l'électrode d'adressage et l'électrode commune, et la face d'entrée faisant un angle γ avec la face supérieure du substrat supérieur ou égal à 30 degrés et un angle égal à l'angle β avec l'axe yi ; une région haut indice s'étendant depuis la face de sortie du guide d'onde intermédiaire, jusqu'à la face d'entrée d'une structure d'extraction adjacente de la matrice de structures d'extraction, la région haut indice ayant un indice de réfraction $n_p$ strictement supérieur au premier niveau.

Le dispositif d'affichage est configuré de sorte que pour chaque structure d'extraction le premier niveau, le deuxième niveau et l'agencement du guide d'onde intermédiaire par rapport au guide d'onde d'adressage sont tels qu'un mode optique issu du module d'éclairage et guidé dans le guide d'onde d'adressage, est couplé au moins en partie, par couplage évanescent du guide d'onde d'adressage vers le guide d'onde intermédiaire, uniquement lorsque l'indice de réfraction du cristal liquide est égal au deuxième niveau de façon à générer un faisceau émis se propageant dans la région haut indice depuis la face de sortie vers la face d'entrée de la structure d'extraction adjacente ; et l'angle β est supérieur ou égal à un angle d'inclinaison minimal strictement positif au-delà duquel le faisceau émis se réfléchit par réflexion totale interne sur la face d'entrée de la structure d'extraction adjacente en un faisceau réfléchi, pour être extrait du dispositif d'affichage en un faisceau pixel correspondant à l'affichage d'un pixel de l'image.

Certains aspects préférés mais non limitatifs de ce dispositif d'affichage d'une image sont les suivants.

Chaque guide d'onde d'adressage de l'ensemble peut avoir une portion rectiligne ; les portions rectilignes peuvent former un réseau périodique de période p selon l'axe yi ; les électrodes d'adressage peuvent intersecter les guides d'onde d'adressage au niveau des portions rectilignes ; la matrice de structures d'extraction de lumière peut être périodique de période $L_C$ selon l'axe xa ; et dans lequel $L_C$ est strictement supérieur à p.

$L_C$ peut être tel que pour chaque structure d'extraction, l'intensité du faisceau émis peut être supérieure ou égal à 80 % de l'intensité du mode optique.

L'angle β peut être égal à $arccos\left(\sqrt{\frac{p}{L_C}}\right)$.

La différence entre $n_p$ et le deuxième niveau peut être inférieure ou égale à 0,05 en valeur absolue.

Pour chaque électrode d'adressage, les guides d'onde intermédiaires des structures d'extraction situés aux intersections entre l'électrode d'adressage et les guides d'onde d'adressage de l'ensemble peuvent être des portions d'un guide d'onde planaire commun.

Le dispositif d'affichage peut comporter en outre un capot transparent d'indice optique nv strictement inférieur à $n_p$. Chaque structure d'extraction de la matrice peut comprendre en outre un hologramme en regard de la face d'entrée de la structure d'extraction adjacente configuré pour dévier le faisceau réfléchi de façon à réduire un angle de propagation dans le capot du faisceau réfléchi par rapport à une normale à un plan principal du capot. Chaque hologramme peut être logé dans le capot ou sur une face du capot opposée à la région haut indice.

L'hologramme peut être un hologramme en réflexion.

L'angle γ peut être inférieur ou égal à 45 degrés.

Les guides d'onde d'adressage peuvent comporter chacun un modulateur optique distinct, agencé entre le module d'éclairage et la matrice de structures d'extraction de lumière.

L'image peut être divisée en plusieurs zones d'affichage contigües, chacune pouvant correspondre à un ensemble de guides d'onde d'adressage adjacents, couplés optiquement à une source de lumière distincte du module d'éclairage.

Le dispositif d'affichage peut comprendre en outre un circuit d'adressage connecté électriquement à l'ensemble d'électrodes d'adressage, l'ensemble d'électrodes d'adressage peut être divisé en zones d'adressage contigües, chacune pouvant consister en un groupe d'électrodes d'adressage adjacentes. Le circuit d'adressage peut être configuré pour polariser séquentiellement, une à une, les électrodes d'adressage de chaque zone d'adressage de façon à faire basculer l'indice de réfraction du cristal liquide des guides d'onde intermédiaires correspondants vers le deuxième niveau.

Les zones d'adressage peuvent toutes comporter le même nombre d'électrodes d'adressage.

Le circuit d'adressage peut être configuré pour polariser simultanément une électrode d'adressage de chaque zone d'adressage.

Les électrodes d'adressage peuvent être agencées de telle façon que chaque couple d'électrodes d'adressage polarisées simultanément et appartenant à des zones d'adressage contigües, activent deux structures d'extraction de la matrice situées à deux extrémités opposées de la matrice de structures d'extraction et en regard de deux guides d'onde d'adressage adjacents.

Le circuit d'adressage peut polariser une à une les électrodes d'adressage selon la même séquence dans toutes les zones d'adressage.

Le dispositif d'affichage peut comprendre en outre un circuit de conversion d'image configuré pour convertir une image standard consistant en une matrice orthogonale de pixels, en l'image à afficher par le dispositif d'affichage.

L'image à afficher et l'image standard peuvent avoir le même nombre de pixels à 10 % près, et le même rapport d'aspect à 10 % près.

L'invention porte également sur un système d'affichage comprenant un premier et un deuxième dispositif d'affichage d'une image, chacun selon l'une quelconque des caractéristiques précédentes. Les premier et deuxième dispositifs d'affichage d'une image peuvent être agencés l'un au-dessus de l'autre de telle façon que des faisceaux pixel du premier dispositif d'affichage traversent la matrice de structures d'adressage du deuxième dispositif d'affichage.

Les modes optiques issus respectivement des modules d'éclairage du premier et du deuxième dispositifs d'affichage peuvent avoir des longueurs d'onde différentes.

Le système d'affichage peut être configuré pour afficher une image couleur et les matrices de structures d'extraction des premier et deuxième dispositifs d'affichage peuvent être arrangées l'une par rapport à l'autre de façon à ce que les ensembles de pixels des images à afficher par les premier et deuxième dispositifs d'affichage sont des sous-pixels couleurs de l'image couleur.

Les ensembles de guides d'onde d'adressage respectifs des premier et deuxième dispositifs d'affichage peuvent être entrelacés dans un plan d'affichage du système d'affichage, parallèle à la face supérieure du substrat, et chaque électrode d'adressage du premier dispositif d'affichage peut être une électrode d'adressage du deuxième dispositif d'affichage.

Les faces de sortie des guides d'onde intermédiaires des premier et deuxième dispositifs d'affichage peuvent faire un angle avec la face supérieure du substrat égal à γ, et un angle avec l'axe yi égal à β.

Chaque guide d'onde planaire commun du premier dispositif d'affichage peut être un guide planaire commun du deuxième dispositif d'affichage.

L'invention porte également sur un procédé de fabrication d'un dispositif d'affichage d'une image selon l'une quelconque des caractéristiques précédentes, comprenant une fourniture d'une partie inférieure du dispositif d'affichage comprenant l'ensemble de guides d'onde d'adressage ; une fourniture d'un capot ; une formation d'une couche structurée sur la partie inférieure ou le capot, par un procédé de lithographie par nano-impression, de façon à ce que la couche structurée comporte des parties saillantes de hauteurs identiques, égales à une hauteur commune ; une formation d'un cordon de colle sur la partie inférieure ou sur le capot, tel que le cordon de colle a une épaisseur supérieure ou égale à la hauteur commune, délimite une région centrale, et comporte une ouverture latérale traversante communiquant avec la région centrale ; un report du capot sur la partie inférieure de façon à ce que la couche structurée joue le rôle d'une entretoise fixant un écartement entre le capot et la partie inférieure, et délimite des volumes continus dans la région centrale ; un collage du capot à la partie inférieure par le cordon de colle ; une introduction d'un cristal liquide dans chaque volume continu par l'ouverture latérale traversante pour obtenir le guide d'onde intermédiaire de chaque structure d'extraction.

Le procédé de lithographie par nano-impression peut comprendre une sous-étape de formation d'un moule de référence pouvant comprendre une ou plusieurs des tâches suivantes : une fourniture d'un substrat maître de silicium cristallin, une gravure humide anisotrope de tranchées dans le substrat maître depuis une face supérieure du substrat maître de façon à faire coïncider une face, dite d'intérêt, de chaque tranchée avec un plan cristallin prédéterminé du silicium. Le procédé de lithographie par nano-impression peut comprendre une sous-étape de formation d'un tampon par moulage sur le moule de référence, et/ou une sous-étape de formation de la couche structurée par moulage d'un film avec le tampon de sorte que des faces du tampon correspondant à des faces d'intérêt forment les faces d'entrée des structures d'extraction de la matrice.

Le tampon peut être souple, le film peut être une colle UV et la formation de la couche structurée peut mettre en œuvre un éclairage UV de la colle UV avant un retrait du tampon.

La colle UV peut avoir un indice de réfraction égal à $n_p$, et la différence entre $n_p$ et le deuxième niveau peut être inférieure ou égale à 0,05 en valeur absolue.

Le procédé de fabrication peut comprendre en outre une étape de formation d'une matrice d'hologrammes pouvant comprendre une ou plusieurs des sous-étapes suivantes : fourniture d'une plaque support et d'un film holographique sur une face de contact de la plaque support, report d'une lame à faces planes et parallèles sur le film holographique, report d'un prisme sur une face de la lame opposée au film holographique, répétition d'une séquence pouvant comporter un éclairement d'une zone du film holographique par un faisceau référence faisant un angle d'incidence prédéterminé avec une face d'entrée du prisme et un faisceau objet, cohérent avec le faisceau référence, faisant un angle, dit d'affichage, avec une normale à la face de contact, l'angle d'incidence étant prédéterminé de sorte que le faisceau référence fait un angle avec la face de contact égal à un angle du faisceau réfléchi de chaque structure d'extraction avec la face supérieure du substrat. La séquence pouvant comporter en outre un déplacement relatif du prisme d'un pas de la matrice d'hologrammes. Le procédé de fabrication peut comprendre en outre une étape de report du film holographique sur le dispositif d'affichage de façon à mettre chaque hologramme en regard d'une face d'entrée d'une structure d'extraction.

L'angle d'affichage peut varier d'une itération à une autre de la séquence.

Le substrat maître peut avoir une orientation et le plan cristallin prédéterminé peut être un plan (111) ou (110).

Le substrat maître peut être une plaque de type silicium sur isolant.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

la figure 1A est une vue schématique de dessus d'un exemple de dispositif d'affichage selon l'invention, sur laquelle seuls certains éléments ont été représentés ;

la figure 1B est une vue schématique de dessus de l'exemple de dispositif d'affichage, sur laquelle des éléments ont été ajoutés par rapport à la figure 1A ;

la figure 2A est une vue schématique en coupe du détail A de la figure 1B, selon une première possibilité ;

la figure 2B est un détail de la figure 2A ;

la figure 2C est une vue schématique en perspective de certains éléments du détail A de la figure 1B ;

la figure 3 est une vue schématique en coupe du détail A de la figure 1B, selon une deuxième possibilité ;

la figure 4 est un schéma optique permettant d'introduire des angles utiles à la compréhension de l'invention ;

la figure 5A est un premier graphique de correspondance angulaire entre des angles exploités par l'exemple de dispositif d'affichage ;

la figure 5B est un deuxième graphique de correspondance angulaire entre des angles exploités par l'exemple de dispositif d'affichage ;

la figure 5C est un troisième graphique de correspondance angulaire entre des angles exploités par l'exemple de dispositif d'affichage ;

la figure 6 est une vue schématique de dessus de l'exemple de dispositif d'affichage en fonctionnement ;

la figure 7 sont des détails d'une image standard et d'une image affichée par l'exemple de dispositif d'affichage à partir de l'image standard ;

la figure 8A est une vue schématique de dessus d'un exemple de système d'affichage comportant deux dispositifs d'affichage selon l'invention ;

la figure 8B est une vue schématique de dessus du détail B de la figure 8A ;

la figure 8C est une vue schématique de dessus du détail C de la figure 8A ;

les figures 9A à 9E sont des vues schématiques en coupe d'un premier procédé de fabrication d'un moule de référence et d'un tampon spécialement conçus pour la mise en œuvre d'un procédé de réalisation de l'exemple de dispositif d'affichage ;

les figures 10A à 10C sont des vues schématiques en coupe d'étapes d'un procédé de fabrication d'une partie supérieure de l'exemple de dispositif d'affichage ;

la figure 11 est une vue schématique en coupe d'un procédé de fabrication d'une matrice d'hologrammes spécialement conçue pour la mise en œuvre du procédé de réalisation de l'exemple de dispositif d'affichage ;

les figures 12A à 12C sont des vues schématiques en coupe d'étapes du procédé de fabrication de l'exemple de dispositif d'affichage ;

les figures 13A à 13D sont des vues schématiques en coupe d'un deuxième procédé de fabrication du moule de référence et du tampon spécialement conçus pour la mise en œuvre du procédé de réalisation de l'exemple de dispositif d'affichage.

## EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. Par ailleurs, les termes « compris entre ... et ... » et équivalents signifient que les bornes sont incluses, sauf mention contraire.

L'invention porte sur un dispositif d'affichage d'une image. Il comprend un module d'éclairage, un ensemble de guides d'onde d'adressage, un ensemble d'électrodes d'adressage et une matrice de structures d'extraction. Chaque intersection d'un guide d'onde d'adressage avec une électrode d'adressage comporte une structure d'extraction de la matrice. Chaque guide d'onde d'adressage est couplé optiquement au module d'éclairage. Les guides d'onde d'adressage et les électrodes d'adressage s'étendent parallèlement à une face supérieure d'un substrat.

Chaque structure d'extraction comporte un guide d'onde intermédiaire qui s'étend depuis une face d'entrée vers une face de sortie. En fonctionnement, un potentiel électrique appliqué à l'électrode d'adressage correspondante agit sur le guide d'onde intermédiaire de façon à augmenter son indice de réfraction jusqu'à un deuxième niveau permettant de coupler optiquement un mode optique guidé par le guide d'onde d'adressage en vis-à-vis de la structure d'extraction avec un mode optique du guide d'onde intermédiaire qui est émis en un faisceau émis par la face de sortie. Les faces d'entrées de tous les guides d'onde intermédiaire ont une orientation telle que chaque faisceau émis d'une structure d'extraction se réfléchit en un faisceau réfléchi sur la face d'entrée de la structure d'extraction suivante.

L'orientation est repérée par un angle $\gamma$ que fait la face d'entrée avec la face supérieure du substrat et un angle $\beta$ que fait l'axe optique du guide d'onde d'adressage 115.j avec la normale à la face d'entrée dans un plan de coupe parallèle à la face supérieure. Les électrodes d'adressage doivent être orientées d'un angle égal à $\pi/2 + \beta$ par rapport aux axes optiques des guides d'onde d'adressage pour pouvoir agir sur les guides d'onde intermédiaire.

Pour qu'il y ait les conditions d'une réflexion totale sur la face d'entrée, le faisceau émis se propage dans une région haut indice. L'indice de réfraction de la région haut indice est proche du deuxième niveau pour limiter une réflexion parasite au niveau de la face de sortie, et strictement supérieur à l'indice de réfraction du guide d'onde intermédiaire en absence d'interaction avec une électrode d'adressage. Dans ces conditions, il est possible à la fois d'obtenir une réflexion totale sur la face d'entrée et d'extraire le faisceau réfléchi du dispositif d'affichage lorsque l'angle $\gamma$ est supérieur ou égal à 30 degrés et l'angle $\beta$ est ajusté à une valeur strictement positive induisant une réflexion totale sur la face d'entrée.

Avantageusement, le dispositif d'affichage comporte une matrice d'hologrammes correspondant à la matrice de structures d'extraction. Chaque hologramme est placé en regard d'une face d'entrée de la matrice de structures d'extraction.

Le dispositif d'affichage muni d'une matrice d'hologrammes est par exemple un micro-écran directif pour lequel chaque pixel est configuré pour émettre un faisceau pixel directif et divergeant se propageant selon un axe d'extraction prédéfini. Le faisceau pixel se propage selon un angle de divergence par rapport à l'axe d'extraction. L'angle de divergence est prédéterminé, de préférence inférieur à 45° ou inférieur à 30°. L'angle de divergence est par exemple sensiblement le même pour tous les pixels. Les axes d'extraction peuvent être différents d'un pixel à un autre et configurés pour couvrir une pupille d'entrée d'un système optique de façon à augmenter un rendement lumineux au travers du système optique. Ce mode de réalisation est particulièrement avantageux lorsque la pupille d'entrée est de taille réduite et/ou destinée à être positionnée proche du micro-écran, ceci afin d'obtenir un système optique compact, comme cela est nécessaire dans des systèmes optiques « proche de l'œil ».

Dans toute la description, deux composants optiques sont dits couplés optiquement lorsqu'un mode optique peut se propager au moins en partie dans les deux composants optiques, éventuellement via des composants optiques intermédiaires. Le couplage peut se faire de différente façon, par exemple via un couplage direct, un réseau de diffraction, un diviseur de puissance, un couplage adiabatique, ou évanescent, ou directionnel, ...

Deux modes optiques guidés sont dits couplés optiquement lorsque la puissance de l'un est issue intégralement de la puissance de l'autre, sans conversion intermédiaire en une autre forme d'énergie.

Par couche, on entend ici et pour la suite de la description, une étendue constituée d'une ou plusieurs sous-couches d'un matériau dont l'épaisseur suivant un axe z est inférieure, par exemple dix fois, voire vingt fois, à ses dimensions longitudinales de largeur et de longueur dans un plan (x, y) perpendiculaire à l'axe z. Une couche peut être structurée. Lorsqu'elle consiste en plusieurs sous-couches, les sous-couches peuvent être en des matériaux différents. La ou les sous-couches s'étendent dans des plans sensiblement parallèles au plan (x, y).

Une couche ou un élément est considéré comme transparent pour un spectre lumineux donné, si la couche ou l'élément transmet au moins 50 % d'un flux lumineux d'intérêt compris dans le spectre lumineux.

Des modes de réalisation particuliers vont être décrits se rapportant à un dispositif d'affichage d'une image constituée d'un ensemble de pixels, préférentiellement agencés en matrice. Cependant, ces modes de réalisation peuvent être adaptés à d'autres dispositifs optoélectroniques, par exemple un micro-écran exploitant un effet d'auto-focalisation ou un réseau phasé optique (ou OPA pour Optical Phase Array, en anglais).

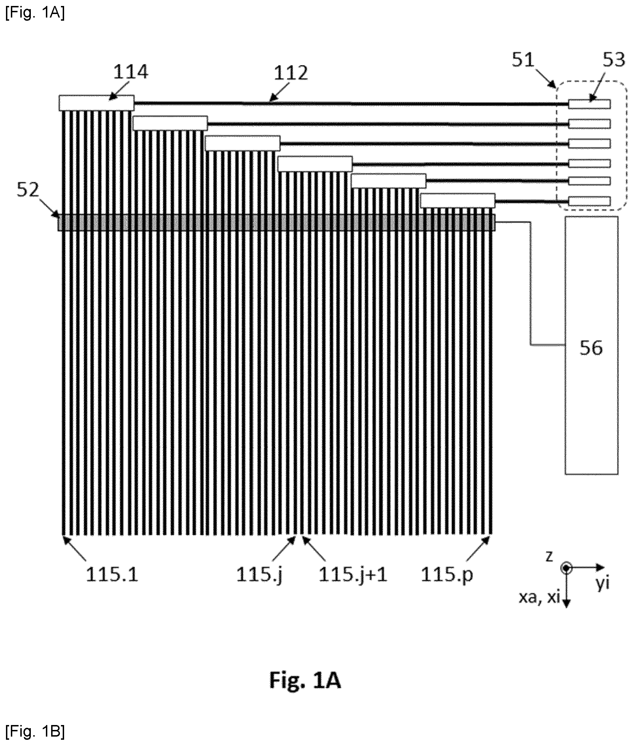

En fonctionnement, le dispositif d'affichage 1 affiche l'image dans un spectre de longueurs d'onde appelé ci-après spectre d'affichage. Il comporte un substrat 100, un module d'éclairage 51, et un ensemble de guides d'onde d'adressage 115.j (figure 1A). Le substrat 100 comprend une face supérieure. Les guides d'onde d'adressage 115.j sont parallèles entre eux. Ils reposent sur la face supérieure de façon à être parallèles avec celle-ci.

On définit ici et pour la suite de la description un repère direct tridimensionnel orthogonal (xi, yi, z), où les axes xi et yi forment un plan parallèle à la face supérieure du substrat 100, l'axe xi étant orienté parallèlement aux guides d'onde d'adressage 115.j, et où l'axe z est orienté de manière sensiblement orthogonale à la face supérieure du substrat 100, depuis la face supérieure vers l'ensemble de guides d'onde d'adressage 115.j. Dans la suite de la description, les termes « vertical » et « verticalement » s'entendent comme étant relatifs à une orientation sensiblement parallèle à l'axe z, et les termes « horizontal » et « horizontalement » comme étant relatifs à une orientation sensiblement parallèle au plan (xi, yi). Par ailleurs, les termes « inférieur », « supérieur », « sous » ou « dessus » s'entendent comme étant relatifs à un positionnement croissant lorsqu'on s'éloigne du substrat 100 suivant la direction +z. Le terme « latéral » se réfère à une orientation sensiblement parallèle à l'axe z.

Le module d'éclairage 51 comporte un nombre $N_l$ supérieur ou égal à 1 de sources de lumière 53. Les sources de lumières 53 émettent dans le spectre d'affichage, par exemple dans le spectre visible. Chaque source de lumière peut être un laser ou une diode électroluminescente. Avantageusement, elle a une faible cohérence temporelle. Ici, chaque source de lumière 53 est une diode superluminescente (ou SLED pour Superluminescent Light Emitting Diode, en anglais).

L'ensemble de guides d'onde d'adressage 115.j est couplé optiquement au module d'éclairage 51. C'est-à-dire qu'en fonctionnement, pour chaque guide d'onde d'adressage 115.j, un mode optique issu du module d'éclairage 51 est guidé dans le guide d'onde d'adressage 115.j depuis une entrée du guide d'onde d'adressage 115.j. L'axe xi est orienté parallèlement au guide d'onde d'adressage 115.j dans la direction de propagation du mode optique guidé. Dans cet exemple, le dispositif d'affichage 1 comporte en outre un ou plusieurs diviseurs de puissance 114 optionnels. Chaque guide d'onde d'adressage 115.j est couplé optiquement à une source de lumière 53 via un diviseur de puissance 114 et un guide d'onde d'entrée 112 du dispositif d'affichage 1. De préférence, chaque guide d'onde d'adressage 115.j est couplé optiquement à une seule source de lumière 53 correspondante. Le guide d'onde d'adressage 115.j, le diviseur de puissance 114 et le guide d'onde d'entrée 112 sont en des matériaux transparents à une longueur d'onde d'émission de la source de lumière 53 correspondante, par exemple en nitrure de silicium.

Chaque diviseur de puissance 114 a une entrée et un nombre $N_g$ de sorties, strictement supérieur à 1. Chaque guide d'onde d'entrée 112 s'étend depuis une entrée d'un diviseur de puissance 114 jusqu'à une source de lumière 53. Chaque guide d'onde d'adressage 115.j est couplé optiquement à une sortie d'un diviseur de puissance 114. Chaque diviseur de puissance 114 est configuré pour répartir équitablement la puissance d'un mode optique incident, en entrée du diviseur de puissance 114, en des modes optiques, chacun guidé par un guide d'onde d'adressage 115.j couplé optiquement à une sortie du diviseur de puissance 114. Le mode optique incident est guidé par un guide d'onde d'entrée 112 depuis une source de lumière 53 correspondante. Chaque diviseur de puissance peut comporter un ou plusieurs coupleurs directionnels et/ou un ou plusieurs coupleurs interférométriques multimodes (ou MMI, pour Multi-Mode Interferometer, en anglais) et/ou une ou plusieurs jonctions Y.

Dans cet exemple, tous les diviseurs de puissance 114 ont le même nombre de sorties $N_g$. Chaque diviseur de puissance 114 regroupe un nombre $N_g$ de guides d'onde d'adressage 115.j adjacents correspondant à une zone d'affichage de l'image. Les zones d'affichages sont contigües. Ainsi, l'ensemble de guides d'onde d'adressage 115.j consiste en $N_g*N_l$ guides d'onde d'adressage 115.j, numérotés de 115.1 à 115.p selon l'axe yi. Pour ne pas encombrer les figures, $N_g$ a été choisi égal à 10. Le nombre $N_l$ de zones d'affichages et de sources de lumière 53 a été limité à 6. Le nombre total de guides d'onde d'adressage 115.j est ainsi égal à 60.

Ici, chaque guide d'onde d'adressage 115.j de l'ensemble comporte une portion rectiligne selon une direction xa parallèle à xi, et de même orientation que xi. L'ensemble des portions rectilignes forme un réseau périodique de période p selon l'axe yi. Les guides d'onde d'adressage 115.j sont des guides monomodes. Ils peuvent être de tous types, comme par exemple des guides en arête, ou comme ici, des guides rubans. La période p est suffisamment grande pour que deux guides d'onde d'adressage 115.j adjacents ne soient pas couplés optiquement entre eux. La période p est choisie au regard d'une empreinte surfacique du dispositif d'affichage 1 devant être respectée, par exemple dans le but de son intégration dans un système optique, ou pour pouvoir être réalisé avec des outils de photolithographie de l'industrie des semiconducteurs. La période p est par exemple comprise entre 1 $\mu$m et 10 $\mu$m, par exemple égale à 4 $\mu$m.

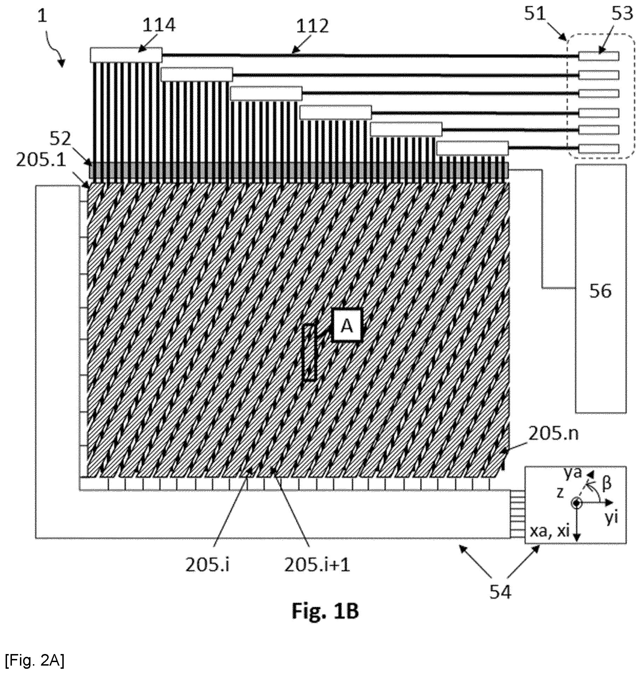

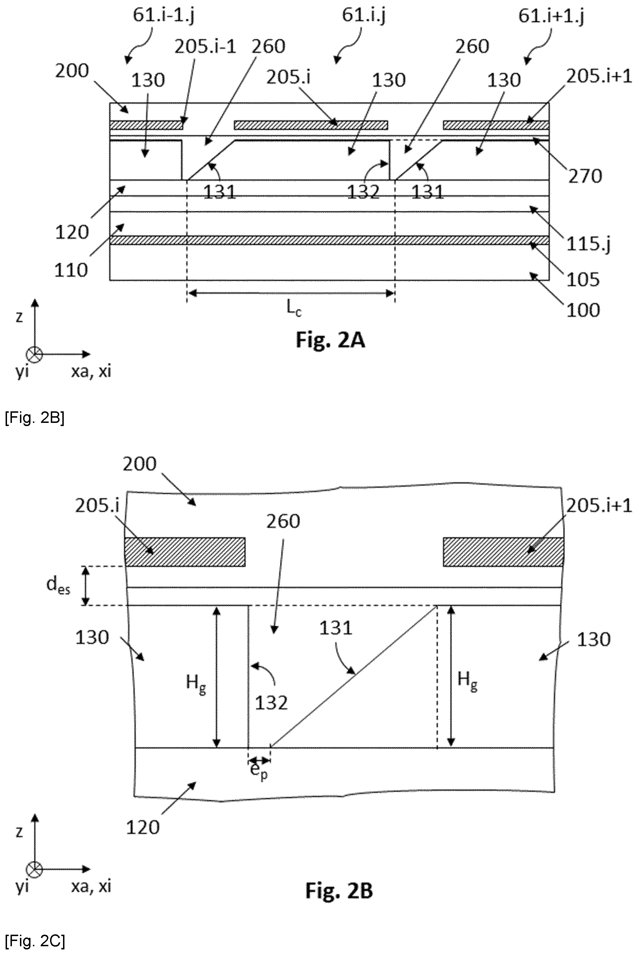

Le dispositif d'affichage 1 comporte en outre une matrice de structures d'extraction 61.i.j et un ensemble d'électrodes d'adressage 205.i, ces dernières étant représentées par des polygones hachurés sur la figure 1B. Chaque structure d'extraction 61.i.j de la matrice est agencée à une intersection d'un guide d'onde d'adressage 115.j et d'une électrode d'adressage 205.i, comme représenté sur la vue en coupe de la figure 2A. En fonctionnement, une électrode d'adressage 205.i, lorsqu'elle est polarisée, agit sur les structures d'extraction 61.i.j en regard pour extraire, au moins en partie, les modes optiques guidés par les guides d'onde d'adressage 115.j correspondants. Un taux d'extraction est défini pour chaque structure d'extraction 61.i.j comme étant égal au rapport de l'intensité de la lumière extraite par la structure d'extraction 61.i.j, sur l'intensité du mode optique guidé correspondant. Dans la description, toute caractéristique décrite en lien avec une structure d'extraction 61.i.j particulière est commune à toutes les structures d'extraction 61.i.j de la matrice, sauf stipulation contraire exprès. De même, tout arrangement particulier d'un élément d'une structure d'extraction 61.i.j particulière avec un autre élément du dispositif d'affichage 1 s'applique à toutes les structures d'extraction 61.i.j de la matrice, sauf stipulation contraire exprès.

Chaque guide d'onde d'adressage 115.j comporte ici un modulateur optique 52 distinct agencé entre le module d'éclairage 51 et la matrice de structures d'extraction 61.i.j. Le modulateur optique 52 est apte à modifier l'intensité d'un mode optique guidé par le guide d'onde d'adressage 115.j à son passage. Il est par exemple apte à modifier l'intensité du mode optique guidé sur un ensemble ou une plage de valeurs prédéterminées, s'étendant éventuellement jusqu'à l'extinction totale du mode guidé. Il peut être de tout type connu, par exemple un modulateur Mach-Zehnder ou un modulateur à électro-absorption. Dans cet exemple, chaque modulateur optique 52 est agencé entre un diviseur de puissance 114 et la matrice de structures d'extraction 61.i.j.

Le dispositif d'affichage 1 comporte en outre un circuit de modulation 56 couplé électriquement à chaque modulateur optique 52. En fonctionnement, le circuit de modulation 56 contrôle chaque modulateur optique 52 de sorte que l'intensité du mode optique guidé soit égal à une valeur de la plage ou de l'ensemble de valeurs prédéterminées.

Les électrodes d'adressage 205.i sont en un ou des matériaux conducteurs de l'électricité, par exemple en métal ou en un oxyde métallique, comme l'oxyde d'indium-étain (ITO) ou l'oxyde de zinc dopé à l'aluminium (AZO). De préférence, les électrodes d'adressage 205.i sont transparentes dans le spectre d'affichage. Elles s'étendent parallèlement à la face supérieure du substrat 100, et parallèlement à un axe ya du plan (xi, yi), faisant un angle $\beta$ avec l'axe yi. Elles sont numérotées de 205.1 à 205.n d'un coin à l'autre de la matrice de structures d'extraction 61.i.j.

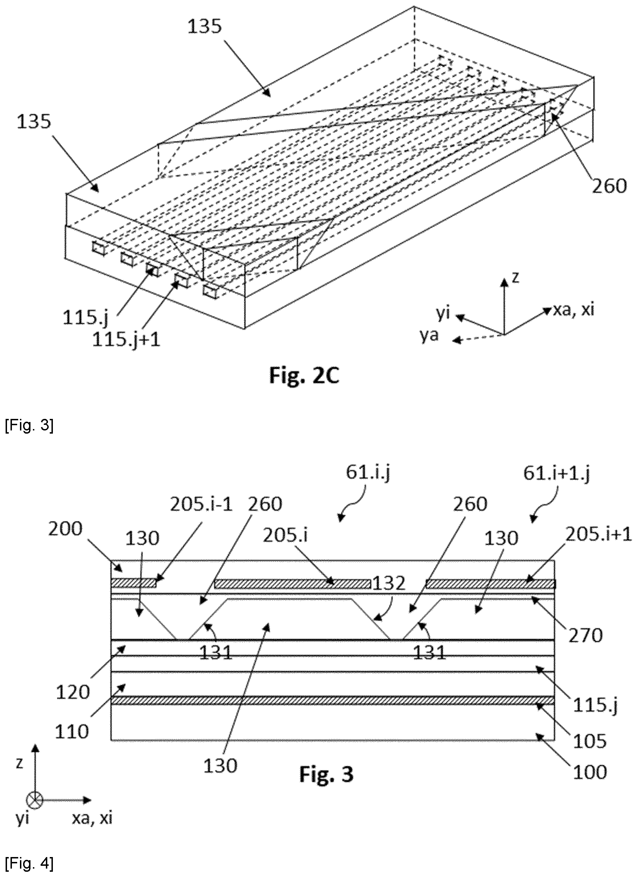

Les caractéristiques communes des structures d'extraction 61.i.j de la matrice sont représentés avec plus de détails sur les figures 2A, 2B et 2C. La figure 2A est une vue schématique selon une coupe verticale incluant un axe optique du guide d'onde d'adressage 115.j, au niveau du détail A de la figure 1B. La figure 2B est un détail de la figure 2A. Et la figure 2C est une vue schématique en perspective de certains éléments du détail A de la figure 1B. En figure 2A, il est représenté la structure d'extraction 61.i.j, entourée de la structure d'extraction précédente 61.i-1.j et de la structure d'extraction suivante 61.i+1.j par ordre d'apparition le long du guide d'onde d'adressage 115.j selon la direction +xi. Les structures d'extraction 61.i-1.j, 61.i.j et 61.i+1.j sont situées respectivement aux intersections des électrodes d'adressage 205.i-1, 205.i et 205.i+1 avec le guide d'onde d'adressage 115.j.

Sur la figure 2A, il est représenté des éléments du dispositif d'affichage 1 non visibles sur les figures 1A et 1B, à savoir une électrode commune 105, une couche d'encapsulation inférieure 110, une couche d'encapsulation supérieure 120, une couche structurée 270 et un capot 200.

L'électrode commune 105 repose ici sur la face supérieure du substrat support 100, éventuellement séparée de celle-ci par une ou plusieurs couches, par exemple une couche électriquement isolante. L'électrode commune 105 est en un matériau conducteur de l'électricité, par exemple en un métal ou, en un oxyde métallique, comme l'oxyde d'indium-étain (ITO) ou l'oxyde de zinc dopé à l'aluminium (AZO). Elle a une portion en regard de chaque structure d'extraction 61.i.j, de préférence elle s'étend continûment sous toute la matrice de structures d'extraction 61.i.j.

Le guide d'onde d'adressage 115.j est séparé de l'électrode commune 105 par la couche d'encapsulation inférieure 110. La couche d'encapsulation inférieure 110 est en contact physique avec l'électrode commune 105 et le guide d'onde d'adressage 115.j. Elle est en un ou plusieurs matériaux diélectriques transparents dans le spectre d'affichage. Le ou les matériaux diélectriques ont des indices de réfraction strictement inférieurs à un indice de réfraction du guide d'onde d'adressage 115.j. Ici la couche d'encapsulation inférieure 110 est en oxyde de silicium. Elle a une épaisseur comprise entre 100 nm et 2 $\mu$m, par exemple égale à 1 $\mu$m.

La structure d'extraction 61.i.j comporte un guide d'onde intermédiaire 130 et une région haut indice 260. Le guide d'onde intermédiaire 130 est séparé du guide d'onde d'adressage 115.j par la couche d'encapsulation supérieure 120. Il s'étend parallèlement à la face supérieure du substrat support 100 depuis une face d'entrée 131 vers une face de sortie 132. Il comprend un cristal liquide. La face d'entrée 131 et la face de sortie 132 sont en regard du guide d'onde d'adressage 115.j. La face d'entrée 131 fait un angle $\gamma$ avec la couche d'encapsulation supérieure 120, la face supérieure de substrat 100 et le plan (xi, yi). Elle est parallèle à l'axe ya. Elle fait par conséquent un angle égal à l'angle $\beta$ par rapport à l'axe yi. La face de sortie 132 est avantageusement parallèle à l'axe ya.

Selon une première possibilité de réalisation de la structure d'extraction 61.i.j représentée en figure 2A, la face de sortie 132 est sensiblement orthogonale à la face supérieure du substrat 100. Selon une deuxième possibilité de réalisation de la structure d'extraction 61.i.j représentée en figure 3, la face de sortie 132 fait un angle strictement inférieur à 90 degrés avec la couche d'encapsulation supérieure 120, la face supérieure de substrat 100 et le plan (xi, yi). Lorsque chaque face de sortie 132 est symétrique d'une face d'entrée 131 correspondante par rapport à un plan parallèle au plan (ya, z), le dispositif d'affichage 1 est fonctionnel pour un autre mode optique guidé par le guide d'onde d'adressage 115.j se propageant en sens opposé.

La couche d'encapsulation supérieure 120 est en contact avec le guide d'onde d'adressage 115.j et le guide d'onde intermédiaire 130 de chaque structure d'extraction 61.i.j de la matrice. Elle est en un ou plusieurs matériaux diélectriques transparents dans le spectre d'affichage. Le ou les matériaux diélectriques ont des indices de réfraction strictement inférieurs à un indice de réfraction du guide d'onde d'adressage 115.j et de l'indice de réfraction extraordinaire (ne) du cristal liquide. Préférentiellement, le(s) indice(s) de réfraction du (des) matériau(x) diélectrique(s) est (sont) supérieur(s) ou égal (égaux) à l'indice de réfraction ordinaire (no) du cristal liquide et inférieur(s) ou égal (égaux) à 1,1 fois l'indice de réfraction ordinaire (no) du cristal liquide. Ici la couche d'encapsulation supérieure 120 est en oxyde de silicium. Elle a par exemple une épaisseur comprise entre 10 nm et 200 nm, mesurée à l'aplomb du guide d'onde d'adressage 115.j.

Le cristal liquide a par exemple une phase nématique. Il a un indice de réfraction ordinaire (no) et un indice de réfraction extraordinaire (ne). L'indice de réfraction ordinaire (no) est l'indice de réfraction affectant une onde lumineuse se propageant dans le cristal liquide, polarisée linéairement selon une direction perpendiculaire à l'orientation moyenne des dipôles électriques de molécules du cristal liquide. L'indice de réfraction extraordinaire (ne) est l'indice de réfraction affectant une onde lumineuse se propageant dans le cristal liquide, polarisée linéairement selon une direction parallèle à l'orientation moyenne des dipôles électriques de molécules du cristal liquide. Par « orientation des molécules d'un cristal liquide », on entend l'orientation moyenne des dipôles électriques des molécules du cristal liquide présentant un dipôle électrique. En l'absence de champ électrique dans le cristal liquide, une ou plusieurs couches d'ancrage, non représentées sur les figures, orientent les molécules du cristal liquide selon une direction prépondérante, dite encore privilégiée.

Le cristal liquide est par exemple un cristal liquide 5CB (4'-Pentyl-4-biphenylcarbonitrile ou 4-Cyano-4'-pentylbiphenyl ou 4-Pentyl-4'-cyanobiphenyl ). Par exemple, l'indice de réfraction ordinaire (no) est égal à 1,542 et l'indice de réfraction extraordinaire (ne) égal à 1,735 pour une longueur d'onde $\lambda$ égale à 532 nm.

Les électrodes d'adressage 205.i sont agencées dans le capot 200. Le guide d'onde d'adressage 115.j et le guide d'onde intermédiaire 130 de la structure d'extraction 61.i.j sont intercalés entre l'électrode commune 105 et l'électrode d'adressage 205.i. L'électrode d'adressage 205.i est en vis-à-vis du guide d'onde intermédiaire 130 et en vis-à-vis de l'électrode commune 105. Elle est située à une distance $d_{es}$, de préférence non nulle, du guide d'onde intermédiaire 130. La distance $d_{es}$ est par exemple comprise entre 100 nm et 2 $\mu$m, par exemple égale à 1 $\mu$m. La distance $d_{es}$ est une distance commune à toutes les structures d'extraction 61.i.j de la matrice.

Les hauteurs des guides d'onde intermédiaire 130 mesurées le long de l'axe z sont égales à une hauteur commune $H_g$. Avantageusement, la hauteur commune est optimisée par simulation pour maximiser le taux d'extraction des structures d'extraction 61.i.j. La hauteur commune $H_g$ est dans cet exemple comprise entre 500 nm et 5 $\mu$m préférentiellement sensiblement égale à 1,5 $\mu$m , pour un spectre d'affichage compris dans spectre visible, et une hauteur des guides d'onde d'adressage 115.j comprise entre 50 nm et 300 nm, préférentiellement sensiblement égale à 150 nm .

Le capot 200 est transparent dans le spectre d'affichage. Il est par exemple en quartz ou en verre ou en un polymère. Il peut éventuellement comprendre des couches transparentes dans le spectre d'affichage, comme par exemple une ou des couches en oxyde de silicium ou en nitrure de silicium. Le capot 200 repose sur les guides d'onde intermédiaire 130 de toutes les structures d'extraction 61.i.j, d'un côté opposé à l'électrode commune 105, par exemple en contact physique avec ceux-ci ou, comme représenté ici, séparé de ceux-ci par une portion de la couche structurée 270 en contact physique avec les guides d'onde intermédiaire 130 et le capot 200. Si la portion a un indice de réfraction supérieur ou égal à l'indice de réfraction extraordinaire (ne) du cristal liquide, la portion du matériau a préférentiellement une épaisseur inférieure à 20 nm, voire inférieure à 10 nm. Le capot 200 a un indice de réfraction $n_v$ strictement inférieur à l'indice de réfraction extraordinaire (ne) sur toute une région inférieure du capot 200 s'étendant depuis les électrodes d'adressage 205.i jusqu'à une face inférieure du capot 200.

La région haut indice 260 s'étend depuis la face de sortie 132 du guide d'onde intermédiaire 130, jusqu'à la face d'entrée 131 de la structure d'extraction suivante 61.i+1.j. Elle a un indice de réfraction $n_p$ strictement supérieur à l'indice de réfraction ordinaire (no) du cristal liquide. Dans cet exemple, la région haut indice 260 est une partie de la couche structurée 270. Cette dernière repose sur la couche d'encapsulation supérieure 120 et encapsule les guides d'onde intermédiaire 130 de toute les structures d'extraction 61.i.j. La couche structurée 270 est en contact avec toute la face d'entrée 131, toute la face de sortie 132 de chaque structure d'extraction 61.i.j, et éventuellement avec la couche d'encapsulation supérieure 120, comme cela est représenté ici. L'indice de réfraction de la région haut indice 260 est par exemple comprise entre 1,5 et 2. Préférentiellement, la différence entre $n_p$ et l'indice de réfraction extraordinaire (ne) du cristal liquide est inférieure ou égale à 0,2 en valeur absolue, préférentiellement inférieure ou égale à 0,05 en valeur absolue.

La face d'entrée 131 de la structure d'extraction suivante 61.i+1.j est située à une distance $e_p$ de la face de sortie 132, mesurée parallèlement au plan (xi, yi). $e_p$ est la plus petite distance séparant la face d'entrée 131 de la face de sortie 132 dans un plan horizontal. La distance $e_p$ est par exemple inférieure à 20 nm, préférentiellement inférieure à 10 nm, avantageusement la plus petite possible, étant entendu qu'elle peut être nulle.

Les faces d'entrée 131 de tous les guides d'onde intermédiaire 130 en regard d'une électrode d'adressage 205.i sont de préférence coplanaires. Les faces de sortie 132 de tous les guides d'onde intermédiaire 130 en regard d'une électrode d'adressage 205.i sont également de préférences coplanaires. C'est le cas dans cet exemple, puisque pour chaque électrode d'adressage 205.i, les guides d'onde intermédiaires 130 en regard de l'électrode d'adressage 205.i sont des portions d'un guide d'onde planaire commun 135, représenté en figure 2C.

Dans cet exemple, lorsqu'une structure d'extraction 61.i.j est précédée d'une autre, la face d'entrée 131 de son guide d'onde intermédiaire 130 est placée à une distance $L_C$ de la face d'entrée 131 du guide d'onde intermédiaire 130 de la structure d'extraction précédente 61.i-1.j. Ainsi, la matrice de structures d'extraction 61.i.j de lumière est périodique de période $L_C$ selon l'axe xa ; et lorsque les guides d'onde d'adressage 115.j comportent des portions rectilignes périodiques de période p, les pixels de l'image sont agencés en une matrice orthogonale selon des pas $d_1 = \frac{p}{\cos \beta}$ et $d_2 = L_C \cos\beta$, respectivement selon ya et un axe de la matrice orthogonal à ya. $L_C$ définit une longueur de couplage entre le guide d'onde intermédiaire 130 et le guide d'onde d'adressage 115.j.

La période $L_C$ est choisie suffisamment grande, pour obtenir taux d'extraction supérieur ou égal à 50 %, voire supérieure ou égal à 80 %, ou encore supérieur ou égal à 90 %. Ici, $L_C$ est compris entre 10 μm et 30 μm, préférentiellement entre 20 μm et 25 μm.

Un exemple de fonctionnement d'une structure d'extraction 61.i.j va à présent être décrit. Un mode optique polarisé de type transverse magnétique (TM) et de longueur d'onde λ appartenant au spectre d'affichage est guidé selon l'axe +xa par le guide d'onde d'adressage 115.j en direction de la face d'entrée 131 du guide d'onde intermédiaire 130. Une différence de potentiel non nulle est appliquée entre l'électrode commune 105 et l'électrode d'adressage 205.i de façon à créer un champ électrique suffisant pour orienter des molécules du cristal liquide parallèlement au champ électrique. L'électrode d'adressage 205.i et l'électrode commune 105 étant en vis-à-vis et en regard du guide d'onde intermédiaire 130, le champ électrique est sensiblement parallèle à l'axe z dans une partie substantielle du guide d'onde intermédiaire 130 définissant une portion de couplage du guide d'onde intermédiaire 130. Les molécules du cristal liquide sont par conséquent en majorité orientées parallèlement à l'axe z dans la portion de couplage, qui est la direction de polarisation du mode optique guidé.

Le mode de fonctionnement décrit ici n'est qu'un exemple conforme avec les figures. Alternativement, la structure d'extraction 61.i.j peut être également apte à extraire un mode guidé polarisé de type transverse électrique (TE) lorsqu'une différence de potentiel nulle ou non-nulle est appliquée entre l'électrode commune 105 et l'électrode d'adressage 205.i. La structure d'extraction 61.i.j peut être également apte à extraire un mode optique polarisé de type transverse magnétique (TM) lorsque l'électrode commune 105 et l'électrode d'adressage 205.i sont au même potentiel. Pour certaines de ces variantes à la portée de la personne du métier, il est nécessaire de modifier l'agencement de l'électrode commune 105 et de l'électrode d'adressage 205.i par rapport au guide d'onde intermédiaire 130 et/ou l'orientation d'un axe extraordinaire du cristal liquide en absence de champ électrique dans le cristal liquide.

L'épaisseur de la couche d'encapsulation supérieure 120 est suffisamment fine pour qu'une partie évanescente du mode optique guidé interagisse avec la portion de couplage. Du fait de l'orientation des molécules parallèles à la direction de polarisation du mode guidé, l'indice de réfraction de la portion de couplage permet à un mode excité par la partie évanescente de se propager dans le guide d'onde intermédiaire 130, c'est-à-dire que les constantes de propagation du mode excité et du mode optique guidé sont sensiblement égales dans la portion de couplage. Ainsi une partie du mode optique guidé est couplée optiquement au guide d'onde intermédiaire 130 par couplage évanescent et sort par la face de sortie 132 pour générer un faisceau émis 91. La lumière extraite qui entre en jeu dans la définition du taux d'extraction (cf. supra) correspond au faisceau émis 91. Ainsi, le taux d'extraction est égal au rapport de l'intensité du faisceau émis 91 sur l'intensité du mode optique guidé. Avantageusement, la différence en valeur absolue entre $n_p$ et l'indice de réfraction extraordinaire (ne) est minimisée pour réduire une réflexion du faisceau émis 91 sur la face de sortie 132 et/ou minimiser une déflexion du faisceau émis 91 au passage de la face de sortie 132 et/ou minimiser un phénomène de diffraction de la partie évanescente du mode optique guidé sur la face d'entrée 131.

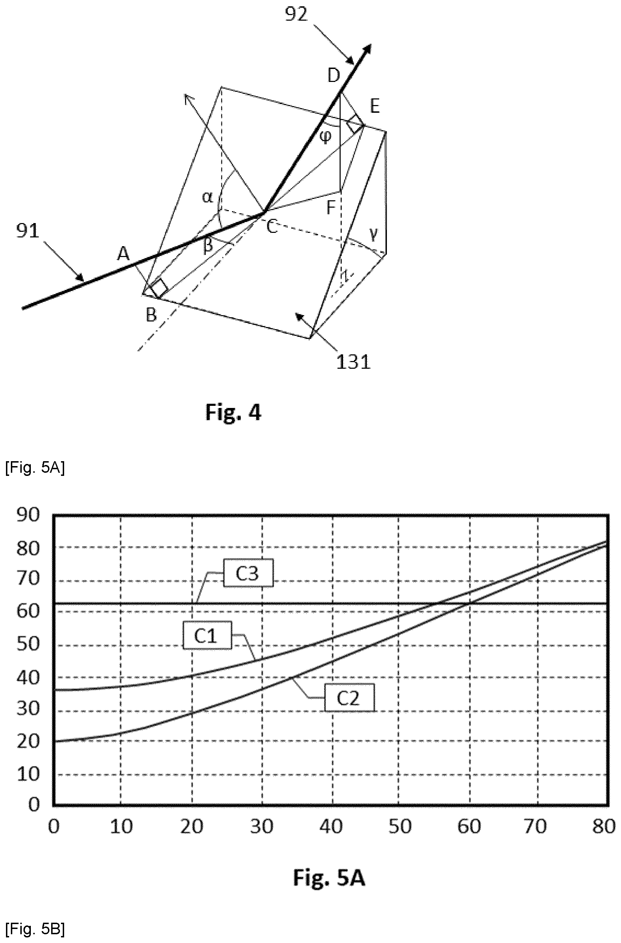

Le faisceau émis 91 se propage en espace libre dans la région haut indice 260 selon un axe principal jusqu'à atteindre la face d'entrée 131 de la structure d'extraction suivante 61.i+1.j. L'axe principal fait un angle α avec une normale à la face d'entrée 131 supérieur ou égal à un angle d'incidence minimal sur la surface la face d'entrée 131 pour lequel la lumière est totalement réfléchie, comme cela est représenté sur le schéma optique de la figure 4. Seule la face d'entrée 131 de la structure d'extraction suivante 61.i+1.j a été représentée sur la figure 4. Les points A, B, C, D, E et F sont des points de constructions matérialisant le passage d'un rayon lumineux au voisinage de la face d'entrée 131 par rapport à celle-ci. Le point D est par exemple un point situé à une interface entre le capot 200 et la couche structurée 270. L'angle α est égal à $\frac{\pi}{2} - arcsin(\cos \beta \sin \gamma)$. Il croît donc en fonction de β. Lorsque γ est égal à 45 degrés, φ est égal à β.

Ainsi, le faisceau émis 91 se réfléchit par réflexion totale interne sur la face d'entrée 131 de la structure d'extraction suivante 61.i+1.j en un faisceau réfléchi 92. Le faisceau réfléchi 92 se propage en espace libre dans la région haut indice 260 selon une direction faisant avec la normale à la face d'entrée 131, un angle égal à l'angle α, et un angle φ avec une normale à la face supérieure du substrat 100 et à une face inférieure du capot 200. L'angle φ peut être déterminé par un modèle de tracé de rayons.

Inversement, lorsqu'une différence de potentiel nulle est appliquée entre l'électrode commune 105 et l'électrode d'adressage 205.i, le champ électrique est sensiblement nul à l'intérieur du cristal liquide. Les molécules du cristal liquide sont par conséquent en majorité orientées parallèlement à une direction favorisée par une ou des couches d'ancrage, parallèle au plan (xi, yi), ici parallèle à l'axe xa. Du fait de cette orientation des molécules, le mode optique guidé interagit avec un milieu d'indice de réfraction égal à l'indice de réfraction ordinaire (no) dans la portion de couplage et aucun mode du guide d'onde intermédiaire 130 n'est excité, ni guidé. Ainsi, le mode optique guidé reste confiné dans le guide d'onde d'adressage 115.j.

Le dimensionnement des structures d'extraction 61.i.j et des guides d'onde d'adressage 115.j, ainsi que leurs positionnements relatifs peuvent être optimisés à l'aide d'outils de simulation de la propagation d'ondes électromagnétiques mettant en œuvre des algorithmes tels que la FDTD (Finite Difference Time Domain, en anglais), la FDE (Finite Difference Eigenmode, en anglais) ou l'EME (Eigen Mode Expension, en anglais). Le comportement du cristal liquide, et par conséquent, de son indice de réfraction, lors de l'application d'une différence de potentiel entre l'électrode commune 105 et l'électrode d'adressage 205.i, peut être déduit de résultats de simulation obtenus par une méthode par éléments finis, comme celle proposée par le logiciel du commerce COMSOL®.

La figure 5A est un graphique donnant les valeurs de $\alpha$ (courbe C1, en degrés) et de $\phi$ (courbe C2, en degrés) en fonction de $\beta$ (axe des abscisses en degrés), pour un angle $\gamma$ égal à 54,74 degrés. La courbe C3 montre la limite angulaire au-delà de laquelle la réflexion est totale sur la face d'entrée pour $n_P$ égal à 1,735 et un indice de réfraction ordinaire du cristal liquide égal à 1,542. Ainsi, dans ce cas particulier, l'angle $\beta$ doit être supérieur ou égal à 56,2 degrés pour que le faisceau émis 91 se réfléchisse intégralement sur la face d'entrée 131 (point d'intersection des courbes C1 et C3). L'angle $\phi$ est donc par conséquent supérieur ou égal à 58,5 degrés (valeur de $\phi$ pour un angle $\beta$ correspondant au point d'intersection des courbes C1 et C3).

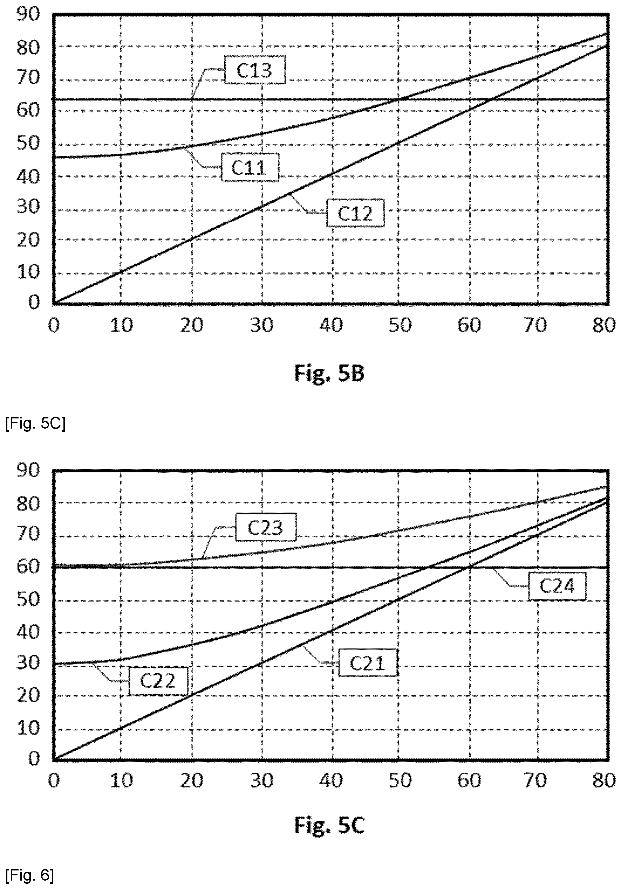

La figure 5B est un graphique donnant les valeurs de $\alpha$ (courbe C11, en degrés) et de $\phi$ (courbe C12, en degrés) en fonction de $\beta$ (axe des abscisses en degrés), pour un angle $\gamma$ égal à 45 degrés. La courbe C13 montre la limite angulaire au-delà de laquelle la réflexion est totale sur la face d'entrée pour $n_P$ égal à 1,735 et un indice de réfraction ordinaire du cristal liquide égal à 1,542. Ainsi, dans ce cas particulier, l'angle $\beta$ doit être supérieur ou égal à 50,2 degrés pour que le faisceau émis 91 se réfléchisse intégralement sur la face d'entrée 131 (point d'intersection des courbes C11 et C13). L'angle $\phi$ est donc par conséquent supérieur ou égal à 50,2 degrés (valeur de $\phi$ pour un angle $\beta$ correspondant au point d'intersection des courbes C11 et C13).

La figure 5C est un graphique donnant les valeurs de $\phi$ (axe des ordonnées en degrés), en fonction de $\beta$ (axe des abscisses en degrés) pour un angle $\gamma$ égal à 45 degrés (courbe C21), égal à 30 degrés ou 60 degrés (courbe C22), égal à 15 degrés ou 75 degrés (courbe C23). La courbe C24 montre la limite angulaire au-delà de laquelle la réflexion est totale sur la face inférieure du capot 200 pour $n_v$ égal à 1,5. Ainsi, pour ce capot 200 particulier et un angle $\gamma$ égal à 45 degrés, un angle $\beta$ compris entre 44,8 degrés et 59,8 degrés permet d'obtenir un faisceau réfléchi 92 qui est transmis à un capot 200 d'indice de réfraction $n_v$ égal à 1,5. Ce résultat est obtenu pour un angle $\beta$ compris entre 52 degrés et 57,7 degrés, lorsque $\gamma$ est égal à 54,74 degrés. Le faisceau réfléchi 92 fait un angle $\phi_v$ avec une normale à la face inférieure du capot 200 égal à arcsin

$$\arcsin\left(\frac{n_p}{n_v}\sin(\phi)\right).$$

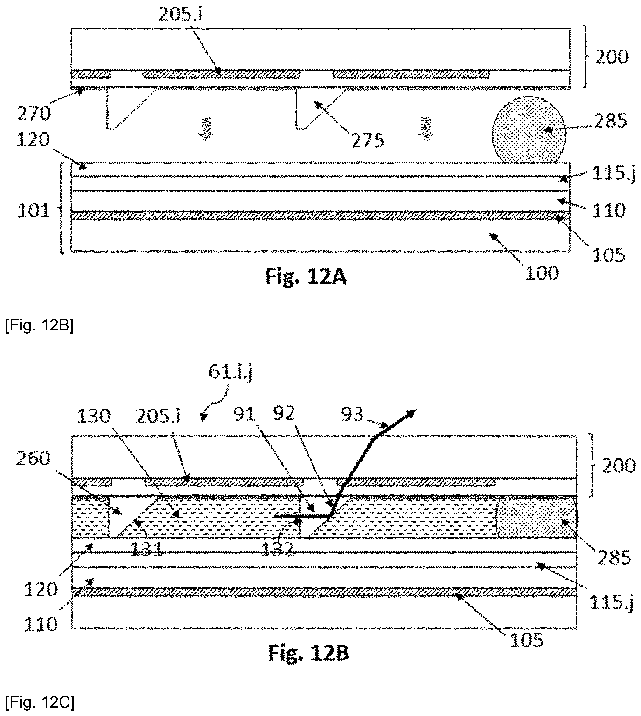

Le capot 200 comporte en outre une face supérieure opposée à la face inférieure du capot 200. Les faces inférieure et supérieure du capot 200 sont planes et parallèles entre-elles. L'angle $\phi_v$ est donc aussi l'angle que fait le faisceau réfléchi 92 avec la face supérieure lorsqu'il l'atteint. A titre d'exemple, dans les conditions de la figure 5B, lorsque $n_v$ est égal à 1,5 et $\beta$ est égal à 50,2 degrés, l'angle $\phi_v$ est égal à 62,7 degrés. L'indice de réfraction du milieu environnant la face supérieure du capot 200 doit être suffisamment élevé pour que le faisceau réfléchi 92 soit extrait du dispositif d'affichage 1 par la face supérieure du capot 200 en un faisceau pixel 93, comme représenté en figure 12B.

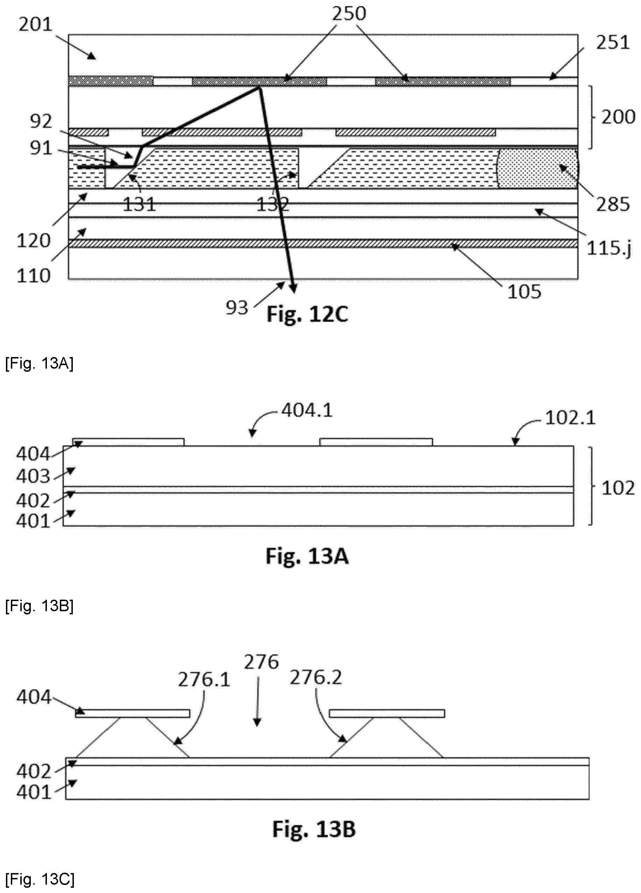

Optionnellement, chaque structure d'extraction 61.i.j comprend en outre un hologramme 250 en regard de la face d'entrée 131 de la structure d'extraction suivante 61.i+1.j. L'ensemble des hologrammes 250 est par conséquent agencé en matrice de même pas que la matrice de structure d'extraction 61.i.j. Chaque hologramme 250 est configuré pour dévier le faisceau réfléchi 92 de façon à réduire un angle de propagation dans le capot 200 du faisceau réfléchi 92 par rapport à une normale à un plan principal du capot. Ici, les faces inférieure et supérieure du capot 200 étant parallèles, l'angle de propagation est égal à $\phi_v$ avant que le faisceau réfléchi 92 n'atteigne l'hologramme 250. L'hologramme 250 peut être un hologramme en transmission. Avantageusement, comme représenté sur la figure 12C, il s'agit d'un hologramme en réflexion. Après l'hologramme 250, le faisceau réfléchi 92 se propage dans le capot 200 selon une direction faisant un angle $\phi'_v$ avec la normale au plan principal et aux faces inférieure et supérieure du capot. L'angle $\phi'_v$ est suffisamment petit pour extraire le faisceau réfléchi 92 du dispositif d'affichage 1 en un faisceau pixel 93, soit par la face supérieure du capot 200 lorsque l'hologramme 250 est un hologramme en transmission, soit par le substrat 100 lorsque l'hologramme 250 est un hologramme en réflexion.

Selon un mode de réalisation particulier du dispositif d'affichage 1, chaque hologramme 250 dévie le faisceau réfléchi 92 de façon à extraire le faisceau réfléchi 92 du dispositif d'affichage 1 en le faisceau pixel 93 selon un axe d'extraction prédéfini et un angle de divergence également prédéfini de sorte que le dispositif d'affichage 1 est un micro-écran directif, par exemple adapté à un système optique « proche de l'œil ».

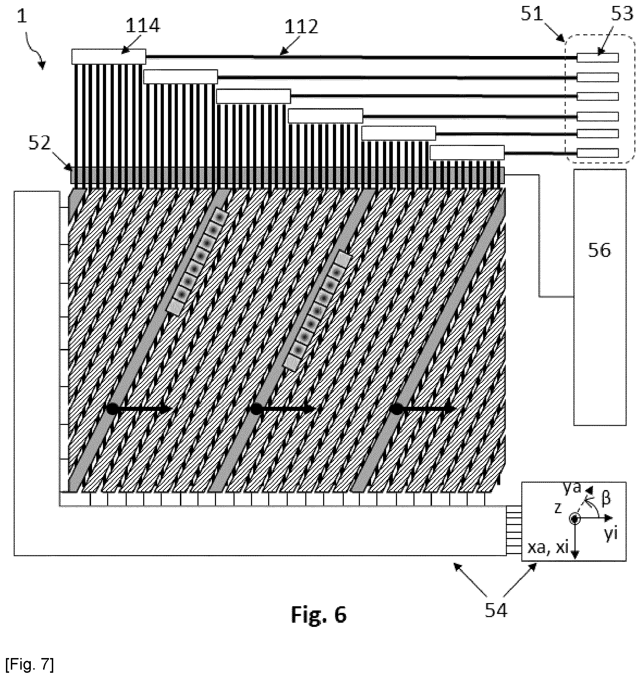

Un exemple de fonctionnement du dispositif d'affichage 1 est illustré en figure 6. Sur cette figure, le dispositif d'affichage 1 est représenté a un instant t donné au cours duquel 4 électrodes d'adressage 205.i (en gris uniforme sur la figure) ont été activées par application d'une différence de potentiel électrique entre chacune de ces électrodes d'adressage 205.i actives et l'électrode commune 105 par un circuit d'adressage 54 du dispositif d'affichage 1. L'électrode commune 105 peut être connecté par le circuit d'adressage 54 à un potentiel électrique fixe, par exemple à la masse.

La différence de potentiel électrique fait basculer l'indice de réfraction du cristal liquide pour la direction de polarisation des modes optiques guidés par les guides d'onde d'adressage 115.j, d'un premier niveau vers un deuxième niveau strictement supérieur au premier niveau. Les premier et deuxième niveaux sont ici égaux, respectivement, à l'indice de réfraction ordinaire et à l'indice de réfraction extraordinaire du cristal liquide. Ainsi, les modes optiques guidés par les guides d'onde d'adressage 115.j intersectant les électrodes d'adressage 205.i actives sont couplés par couplage évanescent aux guides d'onde intermédiaire 130 de structures d'extraction 61.i.j respectives situées à une intersection d'un guide d'onde d'adressage 115.j et d'une électrode d'adressage 205.i active.

Les autres électrodes d'adressage 205.i sont inactives (hachurées sur la figure 6), c'est-à-dire qu'elles sont maintenues au même potentiel électrique que l'électrode commune 105 par le circuit d'adressage 54. Les molécules du cristal liquide des guides d'onde intermédiaire 130 correspondants sont par conséquent orientées selon la direction privilégiée. L'indice de réfraction du cristal liquide pour la direction de polarisation des modes optiques guidés par les guides d'onde d'adressage 115.j est ainsi égal au premier niveau, ici égal à l'indice de réfraction ordinaire. Les modes optiques guidés par les guides d'onde d'adressage 115.j ne sont alors pas couplés aux guides d'onde intermédiaire 130 des structures d'extraction 61.i.j intersectant les électrodes d'adressage 205.i inactives.

A titre d'illustration, le dispositif d'affichage 1 affiche ici, à l'instant t, 8 pixels de l'image pour une électrode d'adressage 205.i active, 9 pixels pour une autre électrode d'adressage 205.i active et aucun pour les deux électrodes d'adressage 205.i restantes. Les pixels affichés sont représentés par des carrés pleins. Les intensités des faisceaux pixels 93 correspondants sont schématiquement représentés en niveaux de gris, un niveau de gris plus sombre correspondant à une intensité plus élevée. Le circuit de modulation 56 contrôle les modulateurs optique 52 de tous les guides d'onde d'adressage 115.j intersectant les électrodes d'adressage 205.i actives, de sorte à fixer les intensités des faisceaux pixels 93 à des valeurs correspondant à des niveaux de gris respectifs de l'image. Dans cet exemple, certains modes optiques guidés ont une intensité sensiblement nulle. Avantageusement, le dispositif d'affichage 1 comprend en outre un circuit d'alimentation du module d'éclairage 51 configuré pour couper l'alimentation de chaque source de lumière 53 correspondant à une zone d'affichage comportant uniquement des pixels à afficher noirs à l'instant t. Le circuit d'alimentation peut être en outre configuré pour régler un niveau d'émission de chaque source de lumière 53 en fonction du niveau de gris du pixel de l'image à afficher le plus brillant dans la zone d'affichage couplée optiquement à la source de lumière 53, de sorte que l'intensité du mode optique guidé correspondant au pixel le plus brillant de la zone d'affichage ne soit pas modulé par le modulateur optique 52 correspondant. Ainsi, une consommation d'énergie du dispositif d'affichage 1 est minimisée.

Sur la figure 6, on a représenté par des flèches une direction de balayage de l'ensemble d'électrodes d'adressage 205.i imposée par le circuit d'adressage 54. L'ensemble d'électrodes d'adressage 205.i est ici divisé en zones d'adressage contigües, chacune consistant en un groupe d'électrodes d'adressage 205.i adjacentes. Dans cet exemple, toutes les zones d'adressage ont le même nombre d'électrodes d'adressage 205.i, ici égal à 8. Le circuit d'adressage 54 est configuré pour polariser séquentiellement selon la direction de balayage, une à une, les électrodes d'adressage 205.i de chaque zone d'adressage de façon à faire basculer l'indice de réfraction du cristal liquide des guides d'onde intermédiaires 130 en regard vers le deuxième niveau. Dans cet exemple, comme cela est représenté en figure 6, le circuit d'adressage 54 polarise simultanément une électrode d'adressage 205.i de chaque zone d'adressage, c'est-à-dire qu'il balaye toutes les zones d'adressage en même temps, ici selon la même séquence. Le balayage est suffisamment rapide pour qu'un spectateur perçoive l'image grâce à un effet de persistance rétinienne.

Les électrodes d'adressage 205.i sont agencées de telle façon que chaque couple électrodes d'adressage 205.i polarisées simultanément et appartenant à des zones d'adressage contigües, activent deux structures d'extraction 61.i.j situées à deux extrémités opposées de la matrice de structures d'extraction 61.i.j et en regard de deux guides d'onde d'adressage 115.j adjacents. Ainsi, à tout instant t de la séquence d'affichage, chaque guide d'onde d'adressage 115.j peut afficher un pixel de l'image, c'est-à-dire qu'une structure d'extraction 61.i.j est activée par guide d'onde d'adressage 115.j. La consommation d'énergie de l'écran est ainsi diminuée et la fréquence d'affichage maximisée.

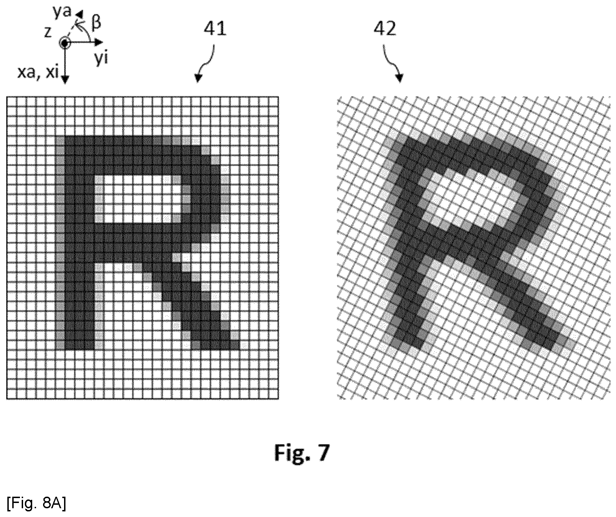

La figure 7 représente un exemple d'une image 42 à afficher par le dispositif d'affichage 1. L'image 42 comporte une matrice de pixels carrés s'étendant selon deux axes orthogonaux dont l'un des deux fait un angle égal à l'angle β avec les guides d'onde d'adressage 115.j. Il s'agit d'une configuration particulièrement avantageuse pour laquelle $d_1$ est égal à $d_2$, obtenue lorsque l'angle β est égal à $\beta_0 = arccos\left(\sqrt{\frac{p}{L_C}}\right)$. Il est par exemple possible de choisir $L_C$ pour obtenir un taux d'extraction de 90 %, et une période p telle β₀ soit compris dans une plage de valeurs permettant aux faisceau émis 91 de se réfléchir en un faisceau réfléchi 92 sur la face d'entrée 131 et éventuellement, de transmettre le faisceau réfléchi 92 à un capot 200. On a reporté dans le Tableau 1 un exemple de paramétrage du dispositif d'affichage 1 permettant d'atteindre ce résultat.

**Tableau 1**

| Paramètre | Valeur |
|---|---|
| no | 1,542 |
| ne | 1,732 |
| np | 1,7 |
| nv | 1,5 |
| Y | 45° |
| p | 7 μm |
| $L_C$ | 21 μm |
| β | 55° |
| $d_1$, $d_2$ | 12 μm |

L'image 42 à afficher peut être obtenue à partir de l'image standard 41 de la figure 7. L'image standard 41 comporte une matrice de pixels agencées selon une grille orthonormée alignée sur les axes xi et yi. Par soucis de clarté, l'image standard 41 et l'image 42 à afficher ont un nombre réduit de pixels, mais elles peuvent avoir un nombre quelconque de pixels. L'image standard 41 peut correspondre à un standard d'image quelconque. Elle peut par exemple être une image VGA, SVGA, HD, Full HD, etc...

Dans le cas où l'image 42 à afficher est obtenue à partir de l'image standard 41, le dispositif d'affichage 1 peut comprendre en outre un circuit de conversion d'image (non représenté) configuré pour convertir l'image standard 41 en l'image 42 à afficher. Pour cela, le circuit de conversion d'image peut opérer tout type de traitements mathématiques et/ou d'image connus, comme par exemple des interpolations, des moyennages, des techniques de tramage. Avantageusement, la matrice de structures d'extraction 61.i.j a un rapport d'aspect similaire ou identique à l'image standard 41. Préférentiellement, le nombre de structures d'extraction 61.i.j est égal au nombre de pixels de l'image standard 41 à 10 % près.

Le dispositif d'affichage 1 obtenu avec les paramètres du Tableau 1 peut par exemple être utilisé pour afficher une image VGA de 640X480 pixels. Son module d'éclairage 51 peut par exemple comporter 20 sources de lumière 53. Un nombre $N_g$ égal à 72 guides d'onde d'adressage 115.j couplés optiquement à une source de lumière 53. La matrice de structures d'extraction 61.i.j a une empreinte d'environ 10 mm par 7,5 mm.

Un système d'affichage 10 peut comporter plusieurs dispositifs d'affichage 1 tels que décrits en lien avec les figures 1A, 1B, 2A, 2B, 2C, 3 et 6 agencés l'un au-dessus de l'autre. Les faisceaux pixels 93 de chaque dispositif d'affichage 1 sont par exemple extraits d'un même côté du système d'affichage 10. Les dispositifs d'affichage 1 peuvent partager leurs circuits d'adressage 54 et/ou leurs circuits de modulation 56 et/ou leurs circuits d'alimentation.

Il est par exemple possible de superposer au moins 2 dispositifs d'affichage 1 pour afficher une image couleur. De préférence, le système d'affichage 10 comporte 3 dispositifs d'affichage 1 dont les spectres d'affichage sont compris dans des gammes de longueurs d'onde correspondant respectivement à une couleur verte, bleue et rouge. Les dispositifs d'affichage 1 peuvent comporter un même nombre de structures d'extraction 61.i.j, agencées de la même manière. Les faces d'entrée 131 des structures d'extraction 61.i.j d'un dispositif d'affichage 1 peuvent être alignées à un décalage constant près aux faces d'entrée 131 des structures d'extraction 61.i.j d'un autre dispositif d'affichage 1, par exemple de façon à ce que le système d'affichage 10 soit apte à afficher une image couleur. Il est par exemple possible d'égaliser toutes les longueurs de couplage des 3 dispositifs d'affichage et de régler les taux d'extraction de chaque dispositif d'affichage 1 en optimisant une ou des dimensions de ses guides d'onde d'adressage 115.j.

Lorsque les spectres d'affichage des dispositifs d'affichage 1 sont différents, un ou plusieurs dispositifs d'affichage 1 du système d'affichage 10 peuvent comporter une matrice d'hologrammes 250 puisque les hologrammes 250 sont de façon inhérente sélectifs en longueur d'onde. Les faisceaux pixels 93 d'un dispositif d'affichage 1 peuvent alors être extraits du dispositif d'affichage 1 et traverser un autre dispositif d'affichage 1 superposé comportant une matrice d'hologrammes 250 avant d'être extrait du système d'affichage 10.

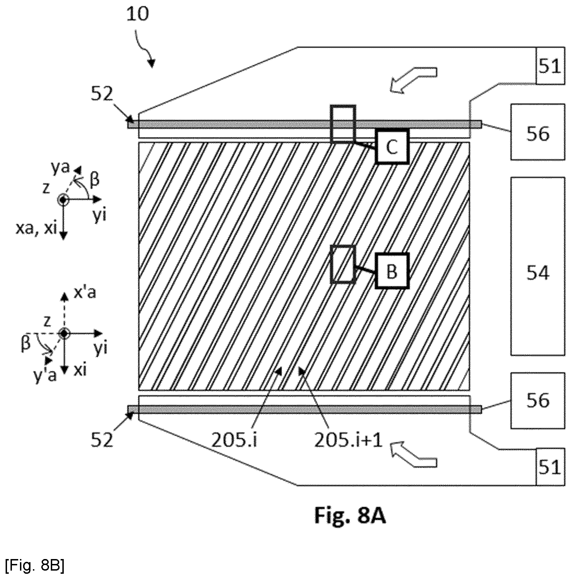

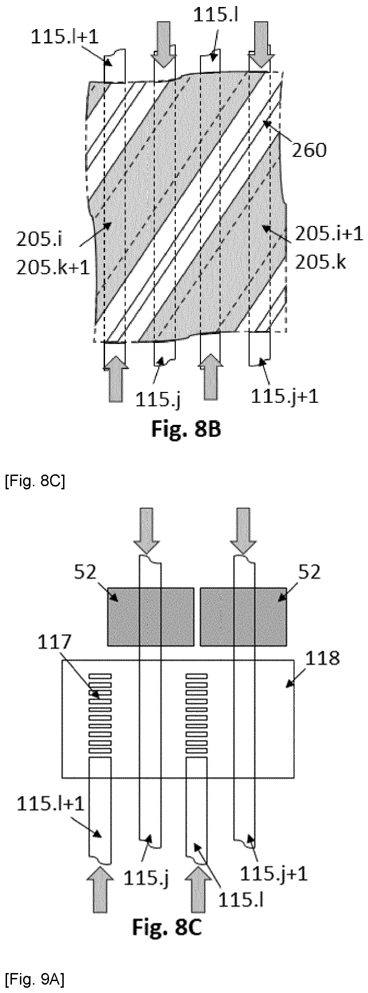

Un deuxième exemple de système d'affichage 10 est représenté en figures 8A, 8B et 8C. Les figures 8B et 8C sont respectivement des vues de dessus des détails B et C de la figure 8A.

Sur ces figures, le système d'affichage 10 comporte un premier et un deuxième dispositif d'affichage 1 tels que décrits en lien avec les figures 1A, 1B, 2A, 2B, 2C, 3 et 6. Les ensembles de guides d'onde d'adressage 115.j, 115.l respectifs des premier et deuxième dispositifs d'affichage 1 sont entrelacés dans un plan d'affichage du système d'affichage 10. Les substrats 100 des premier et deuxième dispositifs d'affichage 1 sont identiques et consistent en un substrat 100 commun. Le plan d'affichage est parallèle à la face supérieure du substrat 100. Chaque électrode d'adressage 205.i du premier dispositif d'affichage 1 est une électrode d'adressage 205.k du deuxième dispositif d'affichage 1.

Les guides d'onde d'adressage 115.j, 115,l des premier et deuxième dispositifs d'affichage 1 comportent des portions rectilignes. Les portions rectilignes, la matrice de structures d'extraction 61.k.l et les électrodes d'adressage 205.k du deuxième dispositif d'affichage 1 se superposent respectivement aux portions rectilignes, à la matrice de structures d'extraction 61.i.j et aux électrodes d'adressage 205.i du premier dispositif d'affichage 1 par une rotation de 180 degrés autour d'un axe parallèle à l'axe z, suivie d'une translation. Ainsi, les portions rectilignes du deuxième dispositif d'affichage 1 sont orientées selon une direction x'a opposée à la direction xa, et ici positionnées à équidistance des portions rectilignes du premier dispositif. Les électrodes d'adressage 205.k du deuxième dispositif d'affichage 1 sont orientées selon une direction y'a opposée à la direction ya. Les structures d'extraction 61.i.j, 61.k.l des premier et deuxième dispositifs d'affichage 1 sont conformes à la deuxième possibilité de la figure 3.

Les circuits d'adressage 54 des premier et deuxième dispositifs d'affichage 1 peuvent être un circuit d'adressage 54 commun, comme représenté ici. En fonctionnement, une électrode d'adressage 205.i, 205.k+1 commune aux premier et deuxième dispositifs d'affichage 1 peut être activée pour coupler optiquement des guides d'onde d'adressage 115.j, 115.l appartenant au premier et au deuxième dispositif d'affichage 1 à des guides d'onde intermédiaire 130 de structures d'extraction 61.i.j, 61.k+1.l correspondantes, appartenant au premier et au deuxième dispositif d'affichage 1. Le système d'affichage 10 est par exemple configuré pour afficher une image mieux résolue en combinant les images affichées par les premier et deuxième dispositifs d'affichage 1, chacun affichant une moitié distincte des pixels de l'image mieux résolue.

En figure 8C, on a représenté un arrangement avantageux permettant d'interrompre les guides d'onde d'adressage 115.j, 115.j+1, 115.l, 115.l+1 pour laisser la place aux modulateurs optiques 52, sans risquer une émission de lumière parasite et/ou un retour inverse de la lumière indésirable dans les guides d'onde d'adressage 115.j, 115.j+1, 115.l, 115.l+1. L'arrangement peut être également utile au dispositif d'affichage 1 décrit en lien avec les figures 1A, 1B, 2A, 2B, 2C, 3 et 6.

Les guides d'onde d'adressage 115.l du deuxième dispositif d'affichage 1 ont ici, chacun, une extrémité opposée au module d'éclairage 51. L'extrémité comporte un réseau de diffraction 117 configuré pour extraire, de préférence en totalité, un mode optique guidé par le guide d'onde d'adressage 115.l correspondant, en direction d'un absorbeur 118. L'absorbeur 118 peut être une couche opaque ou absorbante, par exemple un polymère absorbant. Lorsque les premier et deuxième dispositif d'affichage 1 comprennent un capot 200 commun, ou une plaque support 201 commune telle qu'introduite ci-après, l'absorbeur 118 peut être agencé sur le capot 200 ou sur la plaque support 201.

Le deuxième exemple de système d'affichage 10 peut être superposé à un ou plusieurs dispositifs d'affichage 1 tels que décrits en lien avec les figures 1A, 1B, 2A, 2B, 2C, 3 et 6 ; et/ou à un autre système d'affichage 10 selon le deuxième exemple. Alternativement, les premier et deuxième dispositif d'affichage 1 peuvent partager leurs guides d'onde d'adressage 115.j, 115.l, c'est-à-dire que chaque guide d'onde d'adressage 115.j du premier dispositif d'affichage 1 est un guide d'onde d'adressage 115.l du deuxième dispositif d'affichage 1, et inversement.

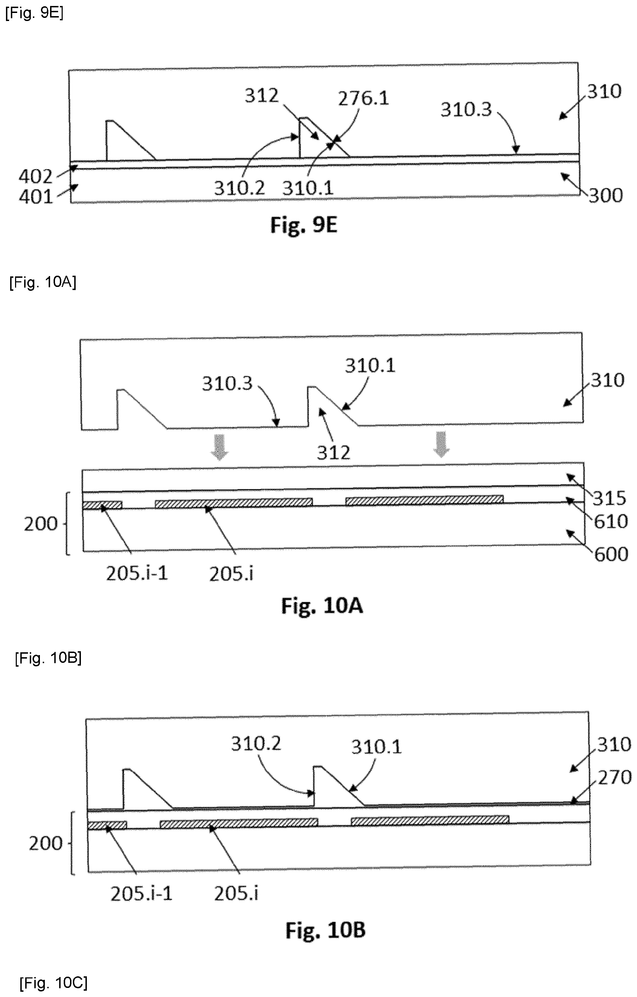

Un exemple de procédé de réalisation d'un dispositif d'affichage 1 tel qu'illustré sur la figure 1B est maintenant décrit. Ce procédé comprend la fabrication d'une partie supérieure 103 du dispositif d'affichage 1 (figures 10A à 10C) et la fabrication proprement dite du dispositif d'affichage 1 intégrant la partie supérieure 103 (figures 12A à 12C).

En figure 10A, on fournit un capot 200. Pour cette étape, il est possible de déposer une couche conductrice de l'électricité sur une face supérieure d'un support 600. Le support 600 est, dans cet exemple, en un matériau transparent dans le spectre d'affichage. Il peut par exemple être en quartz ou en verre ou en un polymère.

La couche conductrice de l'électricité peut être en un métal, ou en un oxyde métallique, comme par exemple un oxyde d'indium-étain (ITO). Elle est gravée localement sur toute son épaisseur pour réaliser les électrodes d'adressage 205.i.

Une couche d'encapsulation 610 est formée sur le support 600, de façon à être en contact avec les électrodes d'adressage 205.i et avec la face supérieure du support 600. La couche d'encapsulation 610 a, sur un côté opposé aux électrodes d'adressage 205.i, une face plane sensiblement parallèle à la face supérieure du support 600. La couche d'encapsulation 610 est en un matériau transparent dans le spectre d'affichage. Elle est par exemple en un même matériau que le support 600. Elle est ici en oxyde de silicium. Le support 600 et la couche d'encapsulation 610 définissent ensemble le capot 200.

On forme ensuite la couche structurée 270 sur le capot 200 par un procédé de lithographie par nano-impression (NIL). Pour cela, un film 315 est déposé sur la couche d'encapsulation 610, en contact avec une face de la couche d'encapsulation 610 opposée au support 600. Le film 315 a un indice de réfraction élevé strictement supérieur à l'indice de réfraction ordinaire du cristal liquide, par exemple égal à l'indice de réfraction extraordinaire du cristal liquide plus ou moins 0,05. Il peut être supérieur ou égal à l'indice de réfraction extraordinaire. Il peut être un xérogel, ou avantageusement, un film de colle UV, par exemple un adhésif optique du commerce comme celui distribué par Norland®, sous la référence NOA 170.

En figure 10B, le film 315 est ensuite moulé par un tampon 310 souple. Au cours de cette étape, le tampon 310 est mis en contact du film 315 et une pression s'exerçant sur le tampon 310, perpendiculairement à la face supérieure du support 600 est appliquée, jusqu'à éventuellement mettre en contact le tampon 310 avec la couche d'encapsulation 610.

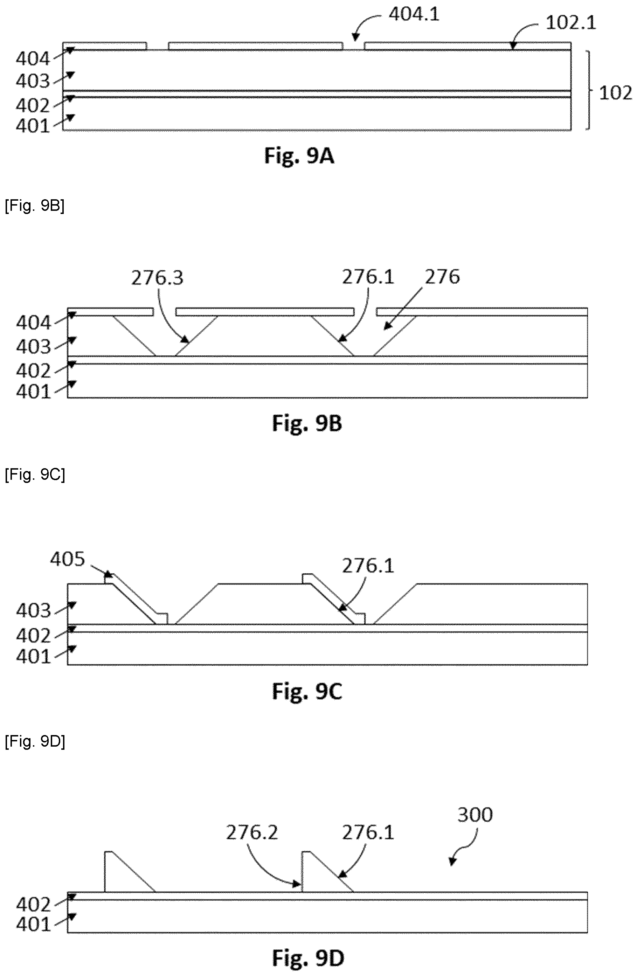

Le tampon 310 peut avantageusement être obtenu par le procédé de fabrication des figures 9A à 9E, ou le procédé des figures 13A à 13D décrits ci-après. Le tampon 310 comporte une face d'appuis 310.3 sensiblement plane et des tranchées 312 s'étendant en profondeur dans le tampon 310 depuis la face d'appuis 310.3. Lorsque le tampon 310 n'est pas mis en contact avec la couche d'encapsulation 610, la pression est uniforme de façon à maintenir la face d'appuis 310.3 du tampon 310 sensiblement parallèle avec une face supérieure de la couche d'encapsulation 610 opposée au support 600. Par conséquent, dans tous les cas, la face d'appuis 310.3 du tampon 310 est sensiblement parallèle avec la face supérieure de la couche d'encapsulation 610 lors de la mise en forme du film 315.

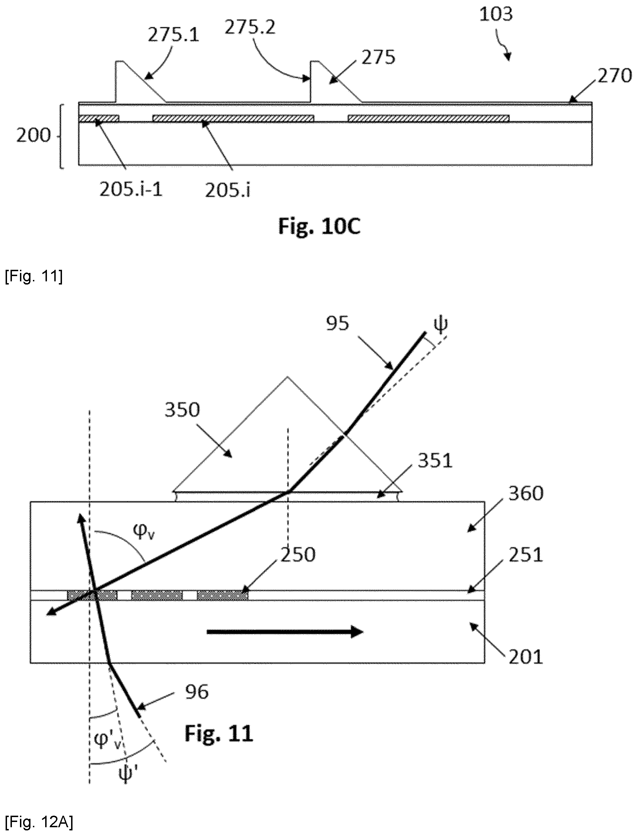

En figure 10C, la partie supérieure 103 du dispositif d'affichage 1 est obtenu. Lorsque le film 315 est une colle UV, il est éclairé par un rayonnement UV en maintenant le tampon 310 en place pour le durcir. Le tampon 310 est ensuite retiré. Comme le tampon 310 est souple, la colle UV n'adhère pas au tampon 310 lors de son retrait. Pour cette sous-étape, le tampon 310 est avantageusement en un élastomère comme le polydiméthylsiloxane (PDMS).

Dans l'alternative pour laquelle le film 315 est un xérogel, le tampon 310 est retiré, et ensuite le film 315 moulé est chauffé pour être réticulé, et par conséquent durci.

Le film 315 moulé et durci constitue la couche structurée 270. Elle comprend des parties saillantes 275 correspondant chacune à une tranchée 312 du tampon 310. La face d'appuis 310.3 du tampon 310 étant parallèle avec la face supérieure de la couche d'encapsulation 610, des arêtes des parties saillantes 275 de la couche structurée 270 sont coplanaires et parallèles à la face supérieure de la couche 610. Les parties saillante 275 de la couche structurée 270 ont par conséquent des hauteurs identiques, égales à une hauteur commune, sensiblement égale à la hauteur $H_g$.

Chaque partie saillante 275 comprend une face inclinée 275.1 correspondant à une première face 310.1 d'une tranchées 312 du tampon 310, et destinée à être une face d'entrée 131 d'une structure d'extraction 61.i.j. Elle comporte également une face 275.2 opposée à la face inclinée 275.1, correspondant à une deuxième face 310.2 de la tranchées 312. La face 275.2 est destinée à être la face de sortie 132 de la structure d'extraction 61.i-1.j précédant la structure d'extraction 61.i.j.

Alternativement, la couche structurée 270 peut être formée par une lithographie en niveaux de gris.

Une couche de polyimide (non représentée) est ensuite formée en contact de la couche structurée 270 entre les parties saillantes 275, ou en contact de la couche d'encapsulation 610 lorsque le tampon 310 a été mis au contact de celle-ci lors de l'étape de lithographie par nano-impression. La couche de polyimide est brossée dans le sens d'une direction destinée à être une direction favorisée pour l'orientation des molécules du cristal liquide lorsqu'aucun champ électrique n'est présent dans le cristal liquide. La couche de polyimide est ainsi destinée à être une couche d'ancrage supérieure du cristal liquide.

En figure 12A, on fournit une partie inférieure 101 du dispositif d'affichage 1. La partie inférieure 101 est une puce photonique. Elle comprend le substrat 100, l'électrode commune 105, la couche d'encapsulation inférieure 110, l'ensemble de guides d'onde d'adressage 115.j, la couche d'encapsulation supérieure 120 et une couche d'ancrage inférieure du cristal liquide (non représentée).

Tout comme la couche d'ancrage supérieure, la couche d'ancrage inférieure peut être une couche de polyimide. Elle est brossée dans le sens d'une direction destinée à être la direction favorisée pour l'orientation des molécules du cristal liquide lorsqu'aucun champ électrique n'est pas présent dans le cristal liquide.

Un cordon de colle 285 est formé sur la couche d'ancrage inférieure ou en contact avec la couche d'encapsulation supérieure 120. Le cordon de colle 285 est fermé, c'est-à-dire qu'il délimite une région centrale. Il comporte au moins une ouverture latérale traversante communiquant avec la région centrale. La région centrale peut par exemple avoir une forme sensiblement rectangulaire. Alternativement, le cordon de colle 285 peut être formé sur la partie supérieure 103.

La partie supérieure 103 de la figure 10C est ensuite reportée sur la couche d'encapsulation supérieure 120, de façon à mettre les parties saillantes 275 de la couche structurée 270 en contact avec la couche d'ancrage inférieure au niveau de la région centrale. De préférence, toutes les parties saillantes sont entièrement en regard de la région centrale. Il peut être appliqué à la partie supérieure 103, une pression suffisante pour enfoncer les parties saillantes dans la couche d'ancrage inférieure, éventuellement jusqu'à mettre en contact les parties saillantes avec la couche d'encapsulation supérieure 120. Le cordon de colle 285 fixe la partie supérieure 103 à la partie inférieure 101. La couche structurée 270 joue le rôle d'une entretoise fixant un écartement entre la couche d'encapsulation supérieure 120 et le capot 200. Si les parties inférieure et supérieure 101, 103 sont rigides, le cordon de colle 285 peut être une colle UV, par exemple la même colle UV que le film 315. Le cas échéant, il est éclairé par un rayonnement UV de façon à fixer la partie supérieure 103 à la partie inférieure 101.

En figure 12B, un cristal liquide est introduit dans la région centrale par l'ouverture latérale traversante de façon à remplir tout le volume délimité par le cordon de colle et les couches d'ancrage inférieure et supérieure. L'ouverture latérale traversante est ensuite obturée.

A l'issue de cette étape, on obtient un dispositif d'affichage 1 selon une première possibilité. Des volumes continus, délimités par la couche structurée 270, la couche d'encapsulation supérieure 120 et, éventuellement, la couche d'encapsulation 610 lorsque le tampon 310 a été mis en contact avec la couche d'encapsulation 610, définissent les guides d'onde intermédiaire 130. Chaque guide d'onde intermédiaire 130 s'étend entre deux parties saillantes 275 de la couche structurée 270. La face inclinée 275.1 et la face opposée 275.2 à la face inclinée 275.1 de chaque partie saillante 275 constituent respectivement la face d'entrée 131 d'une structure d'extraction 61.i.j, et la face de sortie 132 de la structure d'extraction 61.i-1.j précédant la structure d'extraction 61.i.j.

La figure 12C est une étape additionnelle et optionnelle, visant à obtenir un dispositif d'affichage 1 selon l'invention comprenant la matrice d'hologrammes 250. Pour cela, on reporte un film holographique 251 comprenant la matrice d'hologrammes 250 sur le capot 200 d'un côté de la partie supérieure 103 opposé à la partie inférieure 101. La matrice d'hologrammes 250 peut être obtenu selon le procédé de la figure 11. La matrice d'hologramme est alignée par rapport à la matrice de structures d'extraction 61.i.j de façon à placer un hologramme 250 en regard de chaque face d'entrée 131 de la matrice de structures d'extraction 61.i.j.

En figure 11, on enregistre une matrice d'hologrammes 250. Pour cela, on dépose un film holographique 251 sur une plaque support 201. Une lame 360 est mise en contact du film holographique 251. La lame 360 et la plaque support 201 sont transparentes dans le spectre d'affichage. Un prisme 350 est positionné sur la lame 360 d'un côté de la lame 360 opposé au film holographique 251. Le prisme 350 est par exemple séparé de la lame 360 par un liquide d'immersion 351 permettant de limiter les réflexions parasites aux interfaces entre le prisme 350, le liquide d'immersion 351 et la lame 360. Le liquide d'immersion 351 permet également de déplacer sans frottement le prisme 350 au cours de l'enregistrement de la matrice d'hologrammes 250. La plaque support 201 et la lame 360 ont chacune des faces opposées planes et parallèles entre-elles.

Le prisme 350 est en un matériau transparent dans le spectre d'affichage. Il a un indice de réfraction élevé, par exemple égal à 1,965. La plaque support 201 et la lame 360 peuvent être par exemple en verre ou en un polymère.

On exécute ensuite un processus itératif au cours duquel, à chaque étape, on fait interférer à une première position de la matrice d'hologrammes 250, un faisceau référence 95 et un faisceau objet 96 ; puis on déplace relativement au prisme 350 l'ensemble constitué par la plaque support 201, le film holographique 251 et la lame 360 jusqu'à atteindre une deuxième position de la matrice d'hologrammes 250.

Les faisceaux référence et objet 95, 96 sont par exemple issus d'une même source laser fibrée munie d'un diviseur de puissance (non représentés). Le faisceau référence 95 atteint le film holographique 251 au travers du prisme 350 et de la lame 360. Le faisceau objet 96 atteint le film holographique 251 au travers de la plaque support 201. Un angle $\Psi$ d'incidence du faisceau référence 95 sur le prisme 350 est tel que le faisceau référence 95 fait un angle au niveau du film holographique 251 par rapport à une normale à un plan principal du film holographique 251, égal à l'angle $\phi_v$.

Un angle $\Psi'$ d'incidence du faisceau objet 96 sur la plaque support 201 est tel que le faisceau objet 96 fait un angle par rapport à la normale au plan principal du film holographique 251, égal à l'angle $\phi'_v$ d'une structure d'extraction 61.i.j correspondante en regard de laquelle l'hologramme 250 est destinée à être positionné. Les angles $\Psi$ et $\Psi'$ sont réglés par des dispositifs optiques non représentés. Le faisceau référence 95 a une divergence et des caractéristiques spectrales similaires ou identiques à un faisceau réfléchi 92 dans le capot 200 issu d'une structure d'extraction 61.i.j. Le faisceau objet 96 a une divergence et des caractéristiques spectrales similaires ou identiques au faisceau pixel 93 dans le capot 200, destiné à être extrait du dispositif d'affichage 1 par la structure d'extraction 61.i.j correspondante. L'angle $\Psi'$ peut être modifié d'une étape à une autre du processus itératif. L'enregistrement de la matrice d'hologrammes 250 est facilité lorsque l'angle $\gamma$ est inférieur ou égal à 45 degrés.

La plaque support 201 est ensuite retirée avec le film holographique 251. Le film holographique 251 est reporté avec la plaque support 201 sur le capot 200 pour obtenir le dispositif d'affichage 1 de la figure 12C.

A présent, un premier procédé de fabrication du tampon 310 va être décrit en lien avec les figures 9A à 9E. Ce procédé conduit à la réalisation d'un tampon 310 spécialement conçu pour la fabrication par nano-impression de structures d'extraction 61.i.j telles que représentées en figure 2A.

En figure 9A, on fournit un substrat maître 102 de silicium cristallin. Le substrat maître 102 peut être issu d'une plaque monolithique en silicium cristallin ou d'une plaque de type silicium sur isolant (ou SOI, pour Silicon On Insulator, en anglais). Il s'agit ici d'une plaque SOI, après une reprise éventuelle d'épitaxie de silicium. Il comprend une plaque 401, une couche supérieure cristalline 403 et une couche d'arrêt 402 intercalée et en contact avec la plaque 401 et la couche supérieure cristalline 403. La couche supérieure cristalline 403 est par exemple en silicium cristallin d'orientation (100) ou (110). La couche d'arrêt 402 est par exemple en oxyde de silicium.

On forme ensuite un masque dur 404 sur une face supérieure 102.1 de la couche supérieure cristalline 403, cette dernière étant située d'un côté de la couche supérieure cristalline 403 opposée à la couche d'arrêt 402. Le masque dur 404 comporte des ouvertures 404.1 traversant de part en part le masque dur 404. Les ouvertures 404.1 sont des tranchées traversantes, parallèles à une direction commune et à la face supérieure 102.1. Le masque dur 404 est par exemple en oxyde de silicium. Les ouvertures 404.1 sont ici distantes d'une distance centre à centre égale à $L_C$ dans le plan de coupe de la figure 9A.

En figure 9B, on grave des tranchées 276 dans la couche supérieure cristalline 403 au travers des ouvertures 404.1 par une gravure humide anisotrope. Lorsque le substrat maître 102 comporte une couche d'arrêt 402, la gravure humide est sélective par rapport à la couche d'arrêt 402. Les tranchées 276 comportent chacune une première face d'intérêt 276.1, une face 276.3 opposée à la première face d'intérêt 276.1 et un fond reliant la première face d'intérêt 276.1 à la face opposée 276.3. La première face d'intérêt 276.1 et la face opposée 276.3 sont des plans cristallins du silicium révélés par la gravure humide anisotrope. Il s'agit par exemple d'une gravure dans une solution d'hydroxyde de tétraméthylammonium (TMAH) ou une solution d'hydroxyde de potassium (KOH). Ainsi, la première face d'intérêt 276.1 et la face opposée 276.3 sont lisses et ont des orientations angulaires précises par rapport à la face supérieure 102.1, égales à 35,26 degrés, 45 degrés ou 54,74 degrés. Ici le fond des tranchées 276 consiste en la couche d'arrêt 402, ainsi la profondeur des tranchées 276 est bien contrôlée. Les tranchées 276 ont par exemple une profondeur comprise entre 500 nm et 5 $\mu$m.

Afin d'obtenir une face d'intérêt 276.1 orientée (110), il est par exemple possible de graver une couche supérieure cristalline 403 orientée (100) au travers d'ouvertures 404.1 orientées parallèlement à la direction <001>, avec une solution à 90°C contenant 2 mol/L KOH et un surfactant, comme le Triton X-100 de formule brute $C_8H_{17}C_6H_4(OC_2H_4)_{9\text{-}10}OH$. La concentration de surfactant peut être comprise entre 20 ppm et 60 ppm. Ainsi, la face d'intérêt 276.1 fait un angle de 45° avec la face supérieure 102.1. Alternativement, il est possible de remplacer la solution par une solution à 80 °C comprenant 25 % en masse de TMAH et environ 10 ppm volumiques d'un surfactant tel qu'un polyoxyalkylene alkyl ether, connu sous la nomenclature NCW-1002.

Similairement, il est possible d'obtenir une face d'intérêt 276.1 faisant un angle de 54,74° avec la face supérieure 102.1 en gravant une couche supérieure cristalline 403 orientée (100) au travers d'ouvertures 404.1 orientées parallèlement à la direction <110>.

En figure 9C, on retire le masque dur 404 et on forme un deuxième masque 405 en contact de la couche supérieure cristalline 403. Le deuxième masque 405 recouvre entièrement la première face d'intérêt 276.1 de chaque tranchée 276 et expose entièrement la face opposée 276.3 de chaque tranchée. Chaque partie du deuxième masque 405 en regard d'une tranchée 276 comporte un bord d'intérêt au niveau de la face supérieure 102.1 parallèle à la direction commune.

En figure 9D, on grave uniquement les parties de la couche supérieure cristalline 403 exposées par le deuxième masque 405, par une gravure sèche anisotrope, c'est-à-dire que le deuxième masque 405 protège la couche supérieure cristalline 403 lors de la gravure. La couche supérieure cristalline 403 est gravée sur toute sa hauteur, de préférence sélectivement par rapport la couche d'arrêt 402. La couche supérieure cristalline 403 ainsi structurée comporte une deuxième face d'intérêt 276.2 en regard de chaque première face d'intérêt 276.1 correspondant à un bord d'intérêt du deuxième masque 405. Les deuxièmes faces d'intérêt 276.2 sont ici sensiblement orthogonales à la face supérieure 102.1. A l'issue de la figure 9D, on obtient un moule de référence 300 qui comporte des parties saillantes de formes géométriques et dispositions correspondant aux régions haut indice 260 des structures d'extractions 61.i.j. Chaque partie saillante s'étend d'une première face d'intérêt 276.1 à une deuxième face d'intérêt 276.2. Le moule de référence 300, ou moule maître, est destiné à la fabrication de tampons 310 pour la réalisation en série de dispositifs d'affichage 1 mettant en oeuvre une lithographie par nano-impression.

En figure 9E, on réalise un tampon 310 à partir du moule de référence 300. Une couche souple, par exemple en un élastomère comme le polydiméthylsiloxane (PDMS), est formée sur le moule de référence 300 de façon à être en contact avec les parties saillantes et la couche d'arrêt 402. La couche souple constitue le tampon 310. Il comprend des tranchées 312, chacune de forme correspondant à une partie saillante du moule de référence 300. Ainsi, chaque tranchée 312 comprend une première face 310.1 et une deuxième face 310.2 correspondant respectivement à la première face d'intérêt 276.1 et à la deuxième face d'intérêt 276.2 d'une partie saillante de la couche supérieure cristalline 403 structurée. La première face 310.1 est par conséquent lisse et d'orientation précise et reproductible. Il en est donc de même de chaque face inclinée 275.1 correspondant à une première face 310.1 du tampon 310 et de chaque face d'entrée 131 correspondant à la face inclinée 275.1.

Lorsque le film 315 est un xérogel, les faces d'entrée 131 obtenues avec un tel tampon 310 font un angle $\gamma$ avec la face supérieure du substrat 100 typiquement compris entre 30 degrés et 60 degrés, l'étape de durcissement par chauffage pouvant impacter le volume des parties saillantes 275. Lorsque le film 315 est une colle UV, l'angle $\gamma$ est sensiblement égal à celui que fait la première face d'intérêt 276.1 avec la face supérieure 102.1. A noter que l'étape de la figure 9E peut être renouvelée plusieurs fois pour réaliser plusieurs tampons 310.

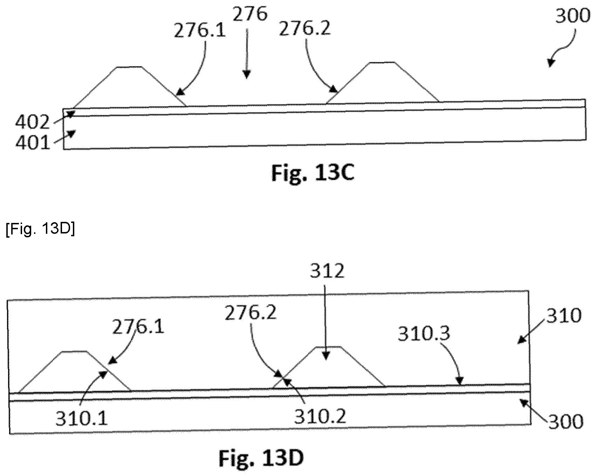

En figures 13A et 13D, il est décrit un deuxième procédé de fabrication du tampon 310 à partir du moule de référence 300. Ce procédé conduit à la réalisation d'un tampon 310 spécialement conçu pour la fabrication par nano-impression de structures d'extraction 61.i.j telles que représentées en figure 3. Seules les différences avec le premier procédé sont explicitement décrites.

L'étape de la figure 13A est identique à l'étape de la figure 9A.

En figure 13B, on obtient directement la deuxième face d'intérêt 276.2, c'est-à-dire que chaque deuxième face d'intérêt 276.2 est un plan cristallin de la couche supérieure cristalline 403 révélé par la gravure anisotrope humide. Les première et deuxième faces d'intérêt 276.1, 276.2 sont des plans cristallins équivalents par symétrie. Ainsi, la deuxième face d'intérêt 276.2 est également lisse et a une orientation angulaire contrôlée par rapport à la face supérieure 102.1.

Les étapes des figures 9C et 9D sont omises. En figure 13C, on retire le masque dur 404.

L'étape de la figure 13D permet d'obtenir un tampon 310 selon une deuxième possibilité. Elle est identique à l'étape de la figure 9E. A l'issue de ce procédé, tout comme la première face 310.1, la deuxième face correspondante 310.2 est également lisse et d'orientation précise. Il en est donc de même de chaque face opposée 275.2 à une face inclinée 275.1 correspondant à une deuxième face correspondante 310.2 du tampon 310, et de face de sortie 132 correspondant à la face opposée 275.2.

Lorsque le film 315 est un xérogel, les faces de sortie 132 obtenues avec un tel tampon 310 font un angle $\gamma$ avec la face supérieure du substrat 100 typiquement compris entre 30 degrés et 60 degrés, l'étape de durcissement par chauffage pouvant impacter le volume des parties saillantes 275. Lorsque le film 315 est une colle UV, l'angle $\gamma$ est sensiblement égal à celui que fait la première deuxième face d'intérêt 276.2 avec la face supérieure 102.1. A noter que l'étape de la figure 13D peut être renouvelée plusieurs fois pour réaliser plusieurs tampons 310 selon la deuxième possibilité.

Des modes de réalisation particuliers viennent d'être décrits. Différentes variantes et modifications apparaîtront à l'homme du métier.

## Revendications

1. Dispositif d'affichage (1) d'une image constituée d'un ensemble de pixels, comportant :

    ○ un substrat (100) muni d'un repère orthogonal (xi, yi) et comprenant une face supérieure,
    ○ un module d'éclairage (51),
    ○ une électrode commune (105),
    ○ un ensemble de guides d'onde d'adressage (115.j) couplés optiquement au module d'éclairage (51), s'étendant parallèlement à un axe orienté xa, parallèle à xi,
    ○ un ensemble d'électrodes d'adressage (205.i) s'étendant parallèlement à un axe orienté ya, faisant un angle $\beta$ avec l'axe yi,
    ○ une matrice de structures d'extraction de lumière (61.i.j) ;

    le dispositif d'affichage (1) étant tel que

    ○ l'électrode commune (105), la matrice de structures d'extraction (61.i.j), l'ensemble de guides d'onde d'adressage (115.j) et l'ensemble d'électrodes d'adressage (205.i) s'étendent successivement depuis la face supérieure, dans des plans distincts parallèles à la face supérieure, et tel que
    ○ chaque structure d'extraction (61.i.j) de la matrice est agencée à une intersection d'un guide d'onde d'adressage (115.j) et d'une électrode d'adressage (205.i), et comporte :

        • un guide d'onde intermédiaire (130) en un cristal liquide s'étendant parallèlement à la face supérieure depuis une face d'entrée (131) du guide d'onde intermédiaire (130) jusqu'à une face de sortie (132) du guide d'onde intermédiaire (130),

            ■ le guide d'onde intermédiaire (130) étant agencé entre l'électrode d'adressage (205.i) et l'électrode commune (105) de façon à faire basculer un indice de réfraction du cristal liquide selon une direction de polarisation, d'un premier niveau vers un deuxième niveau strictement supérieur au premier niveau, lorsqu'une variation d'une différence de potentiel électrique est appliquée entre l'électrode d'adressage (205.i) et l'électrode commune (105), et
            ■ la face d'entrée (131) faisant un angle $\gamma$ avec la face supérieure du substrat supérieur ou égal à 30 degrés et un angle égal à l'angle $\beta$ avec l'axe yi ;

        • une région haut indice (260) s'étendant depuis la face de sortie (132) du guide d'onde intermédiaire (130), jusqu'à la face d'entrée (131) d'une structure d'extraction adjacente (61.i+1.j) de la matrice de structures d'extraction, la région haut indice (260) ayant un indice de réfraction $n_p$ strictement supérieur au premier niveau ;
    le dispositif d'affichage (1) étant configuré de sorte que pour chaque structure d'extraction (61.i.j) :
    • le premier niveau, le deuxième niveau et l'agencement du guide d'onde intermédiaire (130) par rapport au guide d'onde d'adressage (115.j) sont tels qu'un mode optique issu du module d'éclairage (51) et guidé dans le guide d'onde d'adressage (115.j), est couplé au moins en partie, par couplage évanescent du guide d'onde d'adressage (115.j) vers le guide d'onde intermédiaire (130), uniquement lorsque l'indice de réfraction du cristal liquide est égal au deuxième niveau de façon à générer un faisceau émis (91) se propageant dans la région haut indice (260) depuis la face de sortie (132) vers la face d'entrée (131) de la structure d'extraction adjacente (61.i+1.j), et

• l'angle β est supérieur ou égal à un angle d'inclinaison minimal strictement positif au-delà duquel le faisceau émis (91) se réfléchit par réflexion totale interne sur la face d'entrée (131) de la structure d'extraction adjacente (61.i+1.j) en un faisceau réfléchi (92), pour être extrait du dispositif d'affichage en un faisceau pixel (93) correspondant à l'affichage d'un pixel de l'image.

2. Dispositif d'affichage (1) d'une image selon la revendication 1, dans lequel chaque guide d'onde d'adressage (115.j) de l'ensemble a une portion rectiligne ; les portions rectilignes forment un réseau périodique de période p selon l'axe yi ; les électrodes d'adressage (205.i) intersectent les guides d'onde d'adressage (115.j) au niveau des portions rectilignes ; la matrice de structures d'extraction (61.i.j) de lumière est périodique de période $L_C$ selon l'axe xa ; et dans lequel $L_C$ est strictement supérieur à p.

3. Dispositif d'affichage (1) d'une image selon la revendication 2, dans lequel $L_C$ est tel que pour chaque structure d'extraction (61.i.j), l'intensité du faisceau émis (91) est supérieure ou égal à 80 % de l'intensité du mode optique.

4. Dispositif d'affichage (1) d'une image selon les revendications 2 ou 3, dans lequel l'angle β est égal à

$$arccos\left(\sqrt{\frac{p}{L_C}}\right).$$

5. Dispositif d'affichage (1) d'une image selon l'une quelconque des revendications 1 à 4, dans lequel la différence entre $n_p$ et le deuxième niveau est inférieure ou égale à 0,05 en valeur absolue.

6. Dispositif d'affichage (1) d'une image selon l'une quelconque des revendications précédentes, dans lequel, pour chaque électrode d'adressage (205.i), les guides d'onde intermédiaires (130) des structures d'extraction (61.i.j) situés aux intersections entre l'électrode d'adressage (205.i) et les guides d'onde d'adressage (115.j) de l'ensemble sont des portions d'un guide d'onde planaire commun (135).

7. Dispositif d'affichage (1) d'une image selon l'un quelconque des revendications précédentes, dans lequel le dispositif d'affichage (1) comporte en outre un capot (200) transparent d'indice optique $n_v$ strictement inférieur à $n_p$, chaque structure d'extraction (61.i.j) de la matrice comprend en outre un hologramme (250) en regard de la face d'entrée (131) de la structure d'extraction adjacente (61.i+1.j) configuré pour dévier le faisceau réfléchi (92) de façon à réduire un angle de propagation dans le capot (200) du faisceau réfléchi (92) par rapport à une normale à un plan principal du capot (200), et dans lequel chaque hologramme (250) est logé dans le capot (200) ou sur une face du capot (200) opposée à la région haut indice (260).

8. Dispositif d'affichage d'une image selon la revendication 7, dans lequel l'hologramme (250) est un hologramme en réflexion.

9. Dispositif d'affichage (1) d'une image selon la revendication 8, dans lequel l'angle γ est inférieur ou égal à 45 degrés.

10. Dispositif d'affichage (1) d'une image selon l'une quelconque des revendications précédentes, dans lequel les guides d'onde d'adressage (115.j) comportent chacun un modulateur optique (52) distinct, agencé entre le module d'éclairage (51) et la matrice de structures d'extraction de lumière (61.i.j).

11. Dispositif d'affichage (1) d'une image selon l'une quelconque des revendications précédentes, dans lequel l'image est divisée en plusieurs zones d'affichage contigües, chacune correspondant à un ensemble de guides d'onde d'adressage adjacents, couplés optiquement à une source de lumière (53) distincte du module d'éclairage (51).

12. Dispositif d'affichage (1) d'une image selon l'une quelconque des revendications précédentes, dans lequel le dispositif d'affichage comprend en outre un circuit d'adressage (54) connecté électriquement à l'ensemble d'électrodes d'adressage (205.i), l'ensemble d'électrodes d'adressage (205.i) est divisé en zones d'adressage contigües, chacune consistant en un groupe d'électrodes d'adressage (205.i) adjacentes, et dans lequel le circuit d'adressage (54) est configuré pour polariser séquentiellement, une à une, les électrodes d'adressage (205.i) de chaque zone d'adressage de façon à faire basculer l'indice de réfraction du cristal liquide des guides d'onde intermédiaires (130) correspondants vers le deuxième niveau.

13. Dispositif d'affichage (1) d'une image selon la revendication 12, dans lequel les zones d'adressage comportent toutes le même nombre d'électrodes d'adressage (205.i).

14. Dispositif d'affichage (1) d'une image selon la revendication 13, dans lequel le circuit d'adressage (54) est configuré pour polariser simultanément une électrode d'adressage (205.i) de chaque zone d'adressage.

15. Dispositif d'affichage (1) d'une image selon la revendication 14, dans lequel les électrodes d'adressage (205.i) sont agencées de telle façon que chaque couple d'électrodes d'adressage (205.i) polarisées simultanément et appartenant à des zones d'adressage contigües, activent deux structures d'extraction (61.i.j) de la matrice situées à deux extrémités opposées de la matrice de structures d'extraction (61.i.j) et en regard de deux guides d'onde d'adressage (115.j) adjacents.

16. Dispositif d'affichage (1) d'une image selon l'une quelconque des revendications 12 à 15, dans lequel le circuit d'adressage (54) polarise une à une les électrodes d'adressage (205.i) selon la même séquence dans toutes les zones d'adressage.

17. Dispositif d'affichage (1) d'une image selon l'une quelconque des revendications précédentes, dans lequel le dispositif d'affichage (1) comprend en outre un circuit de conversion d'image configuré pour convertir une image standard (41) consistant en une matrice orthogonale de pixels, en l'image (42) à afficher par le dispositif d'affichage (1).

18. Dispositif d'affichage (1) d'une image selon la revendication 17, dans lequel l'image (42) à afficher et l'image standard (41) ont le même nombre de pixels à 10 % près, et le même rapport d'aspect à 10 % près.

19. Système d'affichage (10) comprenant un premier et un deuxième dispositifs d'affichage (1) d'une image, chacun selon l'une quelconque des revendications précédentes, agencés l'un au-dessus de l'autre de telle façon que des faisceaux pixel (93) du premier dispositif d'affichage (1) traversent la matrice de structures d'adressage (61.i.j) du deuxième dispositif d'affichage (1).

20. Système d'affichage (10) selon la revendication 19, dans lequel les modes optiques issus respectivement des modules d'éclairage (51) du premier et du deuxième dispositifs d'affichage (1) ont des longueurs d'onde différentes, et le deuxième dispositif d'affichage (1) est selon l'une quelconque des revendications 7 à 9.

21. Système d'affichage (10) selon la revendication 20, dans lequel le système d'affichage (10) est configuré pour afficher une image couleur et les matrices de structures d'extraction (61.i.j) des premier et deuxième dispositifs d'affichage (1) sont arrangées l'une par rapport à l'autre de façon à ce que les ensembles de pixels des images à afficher par les premier et deuxième dispositifs d'affichage (1) sont des sous-pixels couleurs de l'image couleur.

22. Système d'affichage (10) comprenant un premier et un deuxième dispositifs d'affichage (1) d'une image, chacun selon l'une quelconque des revendications 1 à 18, tel que les ensembles de guides d'onde d'adressage (115.j, 115.l) respectifs des premier et deuxième dispositifs d'affichage sont entrelacés dans un plan d'affichage du système d'affichage (10), parallèle à la face supérieure du substrat (100), et chaque électrode d'adressage (205.i) du premier dispositif d'affichage (1) est une électrode d'adressage (205.k) du deuxième dispositif d'affichage (1).

23. Système d'affichage (10) selon la revendication 22, dans lequel les faces de sortie (132) des guides d'onde intermédiaires (115.j) des premier et deuxième dispositifs d'affichage (1) font un angle avec la face supérieure du substrat (100) égal à γ, et un angle avec l'axe yi égal à β.

24. Système d'affichage (10) selon l'une quelconque des revendications 22 ou 23, dans lequel le premier et le deuxième dispositif d'affichage (1) sont selon la revendication 6, et chaque guide d'onde planaire commun (135) du premier dispositif d'affichage (1) est un guide planaire commun (135) du deuxième dispositif d'affichage (1).

25. Procédé de fabrication d'un dispositif d'affichage (1) d'une image selon l'une quelconque des revendications 1 à 18, comprenant les étapes suivantes :

  ○ fourniture d'une partie inférieure (101) du dispositif d'affichage (1) comprenant l'ensemble de guides d'onde d'adressage (115.j),
  ○ fourniture d'un capot (200),
  ○ formation d'une couche structurée (270) sur la partie inférieure (101) ou le capot (200), par un procédé de lithographie par nano-impression, de façon à ce que la couche structurée (270) comporte des parties saillantes (275) de hauteurs identiques, égales à une hauteur commune,
  ○ formation d'un cordon de colle (285) sur la partie inférieure (101) ou sur le capot (200), tel que le cordon de colle (285) a une épaisseur supérieure ou égale à la hauteur commune, délimite une région centrale, et comporte une ouverture latérale traversante communiquant avec la région centrale,
  ○ report du capot (200) sur la partie inférieure (101) de façon à ce que la couche structurée (270) joue le rôle d'une entretoise fixant un écartement entre le capot (200) et la partie inférieure (101), et délimite des volumes continus dans la région centrale,
  ○ collage du capot (200) à la partie inférieure (101) par le cordon de colle (285),
  ○ introduction d'un cristal liquide dans chaque volume continu par l'ouverture latérale traversante pour obtenir le guide d'onde intermédiaire (130) de chaque structure d'extraction (61.i.j).

26. Procédé de fabrication selon la revendication 25, dans lequel le procédé de lithographie par nanoimpression comprend les sous-étapes suivantes :

○ formation d'un moule de référence (300) comprenant les tâches suivantes :

• fourniture d'un substrat maître (102) de silicium cristallin,
• gravure humide anisotrope de tranchées (276) dans le substrat maître (102) depuis une face supérieure (102.1) du substrat maître (102) de façon à faire coïncider une face, dite d'intérêt (276.1), de chaque tranchée avec un plan cristallin prédéterminé du silicium,

○ formation d'un tampon (310) par moulage sur le moule de référence (300),
○ formation de la couche structurée (270) par moulage d'un film (315) avec le tampon (310) de sorte que des faces (310.1) du tampon correspondant à des faces d'intérêt (276.1) forment les faces d'entrée (131) des structures d'extraction (61.i.j) de la matrice.

27. Procédé de fabrication selon la revendication 26, dans lequel le tampon (310) est souple, le film (315) est une colle UV et la formation de la couche structurée (270) met en œuvre un éclairage UV de la colle UV avant un retrait du tampon (310).

28. Procédé de fabrication selon la revendication 27, dans lequel la colle UV a un indice de réfraction égal à $n_p$, et la différence entre $n_p$ et le deuxième niveau est inférieure ou égale à 0,05 en valeur absolue.

29. Procédé de fabrication selon l'une quelconque des revendications 25 à 28, dans lequel le procédé de fabrication comprend en outre les étapes suivantes :

○ formation d'une matrice d'hologrammes (250) comprenant les sous-étapes suivantes :

• fourniture d'une plaque support (201) et d'un film holographique (251) sur une face de contact de la plaque support (201),
• report d'une lame (360) à faces planes et parallèles sur le film holographique (251),
• report d'un prisme (350) sur une face de la lame (360) opposée au film holographique (251),
• répétition de la séquence suivante :

• éclairement d'une zone du film holographique (251) par un faisceau référence (95) faisant un angle d'incidence prédéterminé avec une face d'entrée du prisme (350) et un faisceau objet (96), cohérent avec le faisceau référence (95), faisant un angle, dit d'affichage, avec une normale à la face de contact, l'angle d'incidence étant prédéterminé de sorte que le faisceau référence (95) fait un angle avec la face de contact égal à un angle du faisceau réfléchi (92) de chaque structure d'extraction (61.i.j) avec la face supérieure du substrat (100),
• déplacement relatif du prisme d'un pas de la matrice d'hologrammes (250) ;

○ report du film holographique (251) sur le dispositif d'affichage (1) de façon à mettre chaque hologramme (250) en regard d'une face d'entrée (131) d'une structure d'extraction (61.i.j).

30. Procédé de fabrication selon la revendication 29, dans lequel l'angle d'affichage varie d'une itération à une autre de la séquence.

31. Procédé de fabrication selon l'une quelconque des revendications 25 à 30, dans lequel le substrat maître a une orientation (100) et le plan cristallin prédéterminé est un plan (111) ou (110).

32. Procédé de fabrication selon l'une quelconque des revendications 25 à 30, dans lequel le substrat maître est une plaque de type silicium sur isolant.

[Fig. 1A]

**Fig. 1A**

[Fig. 1B]

**Fig. 1B**

[Fig. 2A]

**Fig. 2A**

[Fig. 2B]

**Fig. 2B**

[Fig. 2C]

135

135

260

z

yi          xa, xi

ya

115.j

115.j+1

**Fig. 2C**

[Fig. 3]

61.i.j                    61.i+1.j

205.i-1    260    205.i              260    130    205.i+1

200    130                                                              270

132

131                    131

270

120

110                                                              115.j

130              **Fig. 3**                                        105

100

z

yi        xa, xi

[Fig. 4]

**Fig. 4**

[Fig. 5A]

**Fig. 5A**

[Fig. 5B]

**Fig. 5B**

[Fig. 5C]

**Fig. 5C**

[Fig. 6]

**Fig. 6**

[Fig. 7]

**Fig. 7**

[Fig. 8A]

**Fig. 8A**

[Fig. 8B]

**Fig. 8B**

[Fig. 8C]

**Fig. 8C**

[Fig. 9A]

**Fig. 9A**

[Fig. 9B]

**Fig. 9B**

[Fig. 9C]

**Fig. 9C**

[Fig. 9D]

**Fig. 9D**

[Fig. 9E]

**Fig. 9E**

[Fig. 10A]

**Fig. 10A**

[Fig. 10B]

**Fig. 10B**

[Fig. 10C]

275.1  275.2  275  103

270

200

205.i-1  205.i

**Fig. 10C**

[Fig. 11]

95  ψ

350

351

360

φ_v

250

251

201

96

φ'_v

ψ'

**Fig. 11**

[Fig. 12A]

**Fig. 12A**

[Fig. 12B]

**Fig. 12B**

[Fig. 12C]

**Fig. 12C**

[Fig. 13A]

**Fig. 13A**

[Fig. 13B]

**Fig. 13B**

[Fig. 13C]

276.1    276    276.2                                                        300

402
401

**Fig. 13C**

[Fig. 13D]

312

276.1        276.2           310.3

310

310.1                    310.2                                    300

**Fig. 13D**

Europäisches
Patentamt

European
Patent Office

Office européen
des brevets

**RAPPORT DE RECHERCHE EUROPEENNE**

**Numéro de la demande**

**EP 25 20 1218**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2015/370073 A1 (MARTINEZ CHRISTOPHE [FR]) 24 décembre 2015 (2015-12-24) * alinéas [0048] - [0051]; figures 2, 3A, 3B, 4, 6 * ----- | 1-32 | INV. G02F1/13 G02B6/00 G02B27/01 G02F1/13357 |
| A,D | MARTINEZ CHRISTOPHE ET AL: "See-through holographic retinal projection display concept", OPTICA , vol. 5, no. 10 20 octobre 2018 (2018-10-20), page 1200, XP055942106, US ISSN: 2334-2536, DOI: 10.1364/OPTICA.5.001200 Extrait de l'Internet: URL:http://dx.doi.org/10.1364/OPTICA.5.001 200 * le document en entier * ----- | 1-32 | |
| A | TOUBI SALAHEDDINE ET AL: "Study and validation of switchable grating using liquid crystal for active waveguide addressing", 20230314, vol. 12442, 14 mars 2023 (2023-03-14), pages 124420B-124420B, XP060175000, ISSN: 0277-786X, DOI: 10.1117/12.2649749 ISBN: 978-1-5106-5989-6 * le document en entier * ----- | 1-32 | |

**DOMAINES TECHNIQUES RECHERCHES (IPC)**

G02B
G02F

Le présent rapport a été établi pour toutes les revendications

| Lieu de la recherche | Date d'achèvement de la recherche | Examinateur |
|---|---|---|
| Munich | 7 janvier 2026 | Queneuille, Julien |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

..................................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

**EP 25 20 1218**

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

**07-01-2026**

| Document brevet cité au rapport de recherche | Date de publication | Membre(s) de la famille de brevet(s) | Date de publication |
|---|---|---|---|
| US 2015370073    A1 | 24-12-2015 | EP       2960715 A1<br>FR       3022642 A1<br>US    2015370073 A1 | 30-12-2015<br>25-12-2015<br>24-12-2015 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **C. MARTINEZ et al.** See-through holographic retinal projection display concept. *Optica*, October 2018, vol. 5 (10), 1200